# EUROPÄISCHE PATENTSCHRIFT

(11) **EP 3 438 699 B1**
(45) Veröffentlichungstag und Bekanntmachung des Hinweises auf die Patenterteilung: **02.09.2026**
(21) Anmeldenummer: 17184095.2
(22) Anmeldetag: 31.07.2017
(51) Int. Cl.: G01S 7/4863, G01S 7/481, G01S 7/4865, G01S 7/487, G01S 17/10

(54) **DISTANZMESSER MIT SPAD-ANORDNUNG ZUR BERÜCKSICHTIGUNG VON MEHRFACHZIELEN**
RANGE FINDER USING SPAD ARRANGEMENT FOR ACQUIRING MULTIPLE TARGETS
TÉLÉMÈTRE COMPRENANT UN SYSTÈME SPAD DESTINÉ À PRENDRE EN COMPTE DES CIBLES MULTIPLES

(43) Veröffentlichungstag der Anmeldung: 06.02.2019
(73) Patentinhaber: Hexagon Innovation Hub GmbH, 9435 Heerbrugg (CH)
(72) Erfinder: HINDERLING, Jürg, 9437 Marbach (CH); BESTLER, Simon, 88085 Langenargen (DE); PIOK, Thomas, 6842 Koblach (AT); WALSER, Andreas, 9000 St. Gallen (CH); WOHLGENANNT, Rainer, 6833 Klaus (AT)
(74) Vertreter: Kaminski Harmann

(56) Entgegenhaltungen:
- EP-A1- 2 538 242
- DE-A1- 102011 005 746
- DE-A1- 102011 089 629

## Beschreibung

Die Erfindung bezieht sich auf einen Distanzmesser zur hochgenauen Einzelpunkt-Distanzmessung zu einem Zielpunkt mittels eines gerichteten, insbesondere kollimierten, Sendestrahls, wobei beim Verarbeiten des Empfangssignals Mehrfachziele erkannt werden.

Aus dem Stand der Technik sind verschiedene Messvorrichtungen und Kameras bekannt. So lehrt z.B. die DE 10 2011 005 746 A1 eine Messvorrichtung, die eine Empfangseinrichtung mit einer Detektionsfläche zur Detektion von von einem Zielobjekt zurücklaufender optischer Messstrahlung aufweist, wobei die Detektionsfläche der Empfangseinrichtung eine Vielzahl von Pixeln sowie jedes Pixel mindestens eine SPAD aufweist und wobei jedes der Vielzahl von Pixeln mit der Auswerteeinrichtung verbunden ist. Aus der DE 10 2011 089 629 A1 ist eine Lichtlaufzeitkamera bekannt, die einen Lichtlaufzeitsensor umfassend ein Array aus Laufzeitpixeln aufweist, sowie eine Auswerteeinheit, die derart ausgestaltet ist, dass ausgehend von den Ausgangssignalen des Laufzeitpixels ein Entfernungswert ermittelbar ist, wobei mehrere Laufzeitpixel zumindest zeitweise zu Pixelblöcken zusammenfassbar sind, und wobei die Auswerteeinheit derart ausgestaltet ist, dass die Pixelblöcke in Abhängigkeit erfasster Grauwerte gebildet werden und für jeden Pixelblock ein Entfernungswert ermittelbar ist.

Der erfindungsgemässe optoelektronische Distanzmesser ist beispielsweise geeignet für Distanz- und Koordinatenmessgeräte in den Bereichen Geodäsie und Industrievermessung, wo typischerweise LIDAR, Lasertracker, Tachymeter, Laserscanner, oder Profiler eingesetzt werden.

Im Bereich der elektronischen bzw. elektrooptischen Distanzmessung sind verschiedene Prinzipien und Verfahren bekannt. Ein Ansatz besteht darin, gepulste elektromagnetische Strahlung, wie z.B. Laserlicht, auf ein zu vermessendes Ziel auszusenden und nachfolgend ein Echo von diesem Ziel als rückstreuendem Objekt zu empfangen, wobei die Distanz zum zu vermessenden Ziel beispielsweise anhand der Laufzeit, der Form, und/oder der Phase des Pulses bestimmt werden kann. Solche Laserdistanzmesser haben sich mittlerweile in vielen Bereichen als Standardlösungen durchgesetzt.

Zur Detektion des zurückgestreuten Pulses einer zurückgestreuten Pulsfolge werden zumeist zwei unterschiedliche Ansätze oder eine Kombination daraus verwendet.

Bei der so genannten Schwellwertmethode wird ein Lichtpuls detektiert, wenn die Intensität der auf einen Detektor des eingesetzten Distanzmessgeräts einfallenden Strahlung einen gewissen Schwellwert überschreitet. Durch diesen Schwellwert wird verhindert, dass Rauschen und Störsignale aus dem Hintergrund fälschlich als Nutzsignal, d.h. als rückgestreutes Licht des emittierten Pulses, detektiert werden.

Der andere Ansatz basiert auf der Abtastung bzw. dem Sampling des rückgestreuten Pulses. Dieser Ansatz wird typischerweise bei schwachen rückgestreuten Signalen (z.B. Pulssignale) verwendet, wie sie beispielsweise durch grössere Messdistanzen bedingt werden. Diese Methode kann auch als ganzheitliche Signalerfassung betrachtet werden, wobei durch das Abtasten sowohl die gesamte Signal- als auch die wesentliche Rauschinformation erfasst werden. Dies führt beispielsweise zu einer Erhöhung der Messgenauigkeit. Ein emittiertes Signal wird detektiert, indem die von einem Detektor erfasste Strahlung abgetastet, innerhalb des abgetasteten Bereichs ein Signal identifiziert und schliesslich eine Lage des Signals zeitlich bestimmt wird. Durch die Verwendung einer Vielzahl von Abtastwerten und/oder zur Emissionsrate synchronisiertem Aufsummieren des Empfangssignals kann ein Nutzsignal auch unter ungünstigen Umständen identifiziert werden, so dass auch grössere Distanzen oder verrauschte bzw. mit Störungen behaftete Hintergrundszenarien bewältigt werden können.

Heutzutage wird dabei mittels der Wellenformdigitalisierungsmethode ("Waveform Digitizing", WFD) häufig die gesamte Wellenform des analogen Signals der von einem Detektor erfassten Strahlung abgetastet. Nach Identifikation der Codierung des zugehörigen Sendesignals (ASK, FSK, PSK, etc.) eines empfangenen Signals, wird aus einem definierten Verlaufspunkt des abgetasteten, digitalisierten und rekonstruierten Signals, beispielsweise den Wendepunkten, den Kurvenmaxima, oder integral mittels eines aus der Zeitinterpolation bekannten Optimum Filters, sehr genau eine Signallaufzeit ("Pulslaufzeit") bestimmt.

Alternativ oder zusätzlich zur Bestimmung der Pulslaufzeit erfolgt eine (schnelle) Abtastung oft auch hinsichtlich in Amplitude, Phase, Polarisation, Wellenlänge und/oder Frequenz codierten oder modulierten Impulsen oder Impulsfolgen.

Zum Beispiel wird beim Ansatz der zeitlich sehr präzisen Abtastung bzw. dem Sampling des zurückgestreuten Signals das vom Detektor erzeugte elektrische Signal mittels eines Analog-Digital-Wandlers ("Analog-Digital-Converter", ADC) in eine digitale Signalfolge umgewandelt. Dieses digitale Signal wird anschliessend meistens in Echtzeit weiter verarbeitet. In einem ersten Schritt wird diese Signalfolge durch spezielle digitale Filter dekodiert, also erkannt und schliesslich die Lage einer ein Zeitintervall beschreibenden Signatur innerhalb der Signalfolge bestimmt. Beispiele für zeitauflösende Signaturen sind Schwerpunkt, Sinus-/Cosinus-Transformation oder beispielsweise amplitudennormierte FIR-Filter ("finite impulse response filter") mit einem von der Pulsform abgeleiteten Gewichtskoeffizientensatz. Um allfällige Distanzdrifts zu eliminieren wird eine entsprechende zeitauflösende Signatur auch von einem internen Startsignal verglichen. Um irreversible Samplingfehler zu vermeiden, werden zusätzliche dem Fachmann bekannte digitale Signal-Transformationen wie beispielsweise Resampling angewendet.

Eine der einfachsten Modulationsarten ist die Kennzeichnung der einzelnen Impulse oder der Pulsfolgen per Abstandscodierung, wie z.B. beschrieben in der EP 1 832 897 B1. Diese wird beispielsweise zu dem Zwecke der Re-Identifizierbarkeit eingesetzt. Diese Wiedererkennung ist dann erforderlich, wenn eine Mehrdeutigkeit entsteht, welche bei der Laufzeitmessung von Impulsen durch unterschiedliche Situationen hervorgerufen werden kann, beispielsweise wenn sich zwischen Vermessungsgerät und Zielobjekt mehr als ein Impuls oder eine Impulsgruppe befindet. Insbesondere vorteilhaft ist die Pulskodierung beispielsweise bei Mehrstrahlsystemen bestehend aus mehreren Laserstrahlen und zugeordneten Empfangssensoren.

Zielobjekte für eine Distanzmessung können dabei einerseits natürliche Oberflächen von Gegenständen wie Hauswänden, Strassen, Fenster, mit einem Farbanstrich versehene Objekte, matte oder glänzende Metallflächen und dergleichen sein. Andererseits können als Zielobjekte aber auch Zieltafeln wie retroreflektierende Folien oder Cornercubes verwendet werden.

Beim Anmessen von Oberflächen mit einem Laserstrahl wird das Licht je nach den optischen Eigenschaften und der mechanischen Beschaffenheit unterschiedlich gestreut und zurückgeworfen. Bei rauen oder matten Oberflächen wird das Licht nach dem Lambertschen Gesetz gleichmässig in alle Richtungen gestreut. Bei Oberflächen mit Glanz wird ein erheblicher Teil in die spiegelnde Richtung reflektiert, und bei Flächen mit Textur können komplexe Rückstreumuster mit hoher Intensität entstehen.

Da die Rückstreuung hauptsächlich - auch bei Oberflächen mit Lambertschen Streuverhalten - nicht in die Richtung des Distanzmessgeräts erfolgt, ist die Wahrscheinlichkeit sehr hoch, dass das gestreute oder gespiegelte Licht eine weitere Oberfläche trifft und erneut eine Rückstreuung erfährt. Mehrfachreflexionen beeinträchtigen die Distanzmessung. In der Regel ist deshalb ein Distanzmessgerät derart ausgebildet, dass eine Empfangsvorrichtung des Distanzmessgeräts nur über ein sehr kleines Sichtfeld verfügt, wodurch mehrfach reflektierte Rückstrahlung nicht mehr im Gesichtsfeld des Distanzmessgeräts liegt. Diesbezüglich hilft auch nicht ein Laserstrahl mit geringer Divergenz - beispielsweise wird ein durch ein Hologramm erzeugter Besselstrahl genau so wie ein Gaussscher Laserstrahl über Mehrfachstreuung reflektiert und dadurch eine Distanzmessung verfälscht.

Ein weiteres Problem beim Anmessen von Oberflächen mit einem Laserstrahl ergibt sich aus der endlichen lateralen Ausdehnung des senderseitigen Lasermessstrahls. Dadurch ist die laterale Auflösung am Zielobjekt in der Regel begrenzt und es kann bedingt durch den endlichen lateralen Strahldurchmesser mehr als eine Oberfläche erfasst werden, beispielsweise Doppelziele wenn der Sendestrahl über Kanten, Stufen oder Ecken fährt. Schnelle Empfangssensoren die geeignet sind für millimetergenaue Distanzmessung, so wie z.B. Avalanche Photodioden (APD) oder PIN-Dioden ("positive intrinsic negative diode"), haben nicht wie Kameras eine Ortsauflösung. Kameras, beispielsweise mit einer Autofokusoptik, können zwar Ecken, Kanten und Signaturen von Oberflächen von Gegenständen räumlich auflösen, haben aber um mehrere Grössenordnungen nicht die geforderte Zeitauflösung.

Zwar kann beispielsweise ein Distanzmesser basierend auf der WFD-Methode Mehrfachziele erkennen und gegebenenfalls auflösen, falls die den Zielen zugeordneten Empfangsimpulse ausreichend weit auseinander liegen. Die Fähigkeit, Mehrfachobjekte zu trennen, hängt also beispielsweise von der Empfängerbandbreite ab. Beträgt die Empfängerbandbreite beispielsweise weniger als 1 GHz, können Objekte die näher als 30 cm beabstandet sind nicht ausreichend getrennt werden. Bei Kanten, Stufen und Ecken entsteht daher beispielsweise ein Overlapp der Returnpulse und die einzelnen Distanzen können nicht ausreichend genau gemessen werden. Die WFD-Methode erkennt dann zwar eine Anomalie des Empfangspulses in Form einer Pulsverbreiterung, aber eine ausreichend genaue Zerlegung in zwei Einzelpulse ist nicht möglich.

Das Ergebnis von Mehrfachreflexionen oder Mehrfachzielen sind Artefakte in den ermittelten Punktwolken, insbesondere beim Anmessen von Gegenständen mit Teilglanz wie Metallteilen oder Fensterscheiben oder beim Anmessen von Kanten und Ecken. Die Artefakte beinhalten in Fensterscheiben gespiegelte Wände, eine verzerrte Form von Ebenen in Ecken, über glänzende Rohre oder Handläufe eingespiegelte fremde Gegenstände in der Winkelrichtung des Laserstrahls, etc.

Massnahmen für eine Kompensation von durch Mehrfachreflexionen und Mehrfachzielen verursachten Artefakten im Rahmen einer Distanzmessung sind heute wenig bekannt. Moderne Distanzmesser die auf dem Prinzip der Wellenformdigitalisierung (WFD) basieren, können beispielsweise die Verzerrung der Signal- oder Impulsform, welche durch sich überlappende Mehrfachreflexe oder Mehrfachziele entstehen, detektieren. Bei solchen Vorkommnissen wird in der Regel das Resultat der Distanzmessung verworfen.

Bei Mehrfachreflexen oder Mehrfachzielen, bei denen der Abstand zwischen jeweils zugeordneten Distanzwerten grösser ist als die Breite der Wellenform eines einzelnen Reflexionssignals, werden die beiden den Zielen zugeordneten Distanzwerte ausgegeben. Bei herkömmlichen Messvorrichtungen ist es aber nicht möglich zu bestimmen, welches Objekt sich exakt in der idealisierten räumlichen Messrichtung befindet. Beispielsweise trifft der Laserstrahl bei der Distanzmessung gleichzeitig die Kante eines Türrahmens und die Wand dahinter im Raum, so werden zwar zwei für sich recht exakte Distanzen ausgegeben, aber es gibt keine Aussage über die wahre Oberfläche bei dieser Messrichtung. Die beiden Gegenstände scheinen zu überlappen.

Bekannt sind auch Vorrichtungen die bestimmte Mehrfachreflexionen durch räumliche Filterung ausblenden, beispielsweise wobei Mehrfachreflexe ausgeblendet werden, die unter einem Winkel zur optischen Empfangseinheit zurück reflektiert werden, der grösser ist als der Empfangswinkel der Messvorrichtung (FOV). Eine spezielle Blendenanordnung wirkt als räumliches Filter und es werden nur Signale empfangen die einen Strahlwinkel innerhalb des Gesichtsfeldes (FOV) haben. Die Problematik der Mehrfachziele bleibt aber innerhalb des Empfangsgesichtsfelds bestehen. Heutige Distanzmesser haben ein Gesichtsfeld von typischerweise ein bis fünf Millirad.

Die Aufgabe der vorliegenden Erfindung besteht in der Bereitstellung eines Distanzmessverfahrens bzw. Distanzmessers, womit die aus dem Stand der Technik bekannten Nachteile vermieden werden, insbesondere wobei dreidimensional präzise Messungen auch für diffus streuende und spiegelnde Oberflächen mit komplexer morphologischer Oberfläche mit Mehrfachreflexionen im lateralen Strahldurchmesser ermöglicht werden.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft einen Distanzmesser, insbesondere zur Verwendung in einem Laserscanner, Tachymeter, Profiler, Lasertracker, LIDAR-Messgerät, oder handgehaltenen Distanzmessgerät, für eine Distanzmessung zu einem Zielpunkt, mit einem Transmitter der konfiguriert ist zum Erzeugen eines gerichteten, insbesondere kollimierten, Sendestrahls für eine Einzelpunktmessung zum Zielpunkt, insbesondere ein gepulster Lasermessstrahl, einem Empfänger der konfiguriert ist zum Erfassen von zumindest einem Teil des vom Zielpunkt zurückkommenden Sendestrahls, nachfolgend Empfangsstrahl genannt, und einer Recheneinheit die konfiguriert ist zum Ableiten einer Distanz zum Zielpunkt basierend auf dem Empfangsstrahl.

Gemäss der vorliegenden Erfindung weist der Empfänger zum Erfassen des Empfangsstrahls einen optoelektronischen Sensor basierend auf einer Anordnung von Mikrozellen auf, insbesondere wobei der Sensor ausgebildet ist als Anordnung von Single Photon Avalanche Photodioden (SPAD-Anordnung), und der Empfänger und die Recheneinheit sind derart konfiguriert, dass ein Satz von einzeln auslesbaren Teilbereichen des Empfängers definierbar ist. Ferner sind der Empfänger und die Recheneinheit konfiguriert zum Ableiten eines Satzes von Laufzeiten bezüglich unterschiedlichen mit den Teilbereichen des Empfängers erfassten Querschnittsanteilen des Empfangsstrahls, wodurch beispielsweise eine Wertung des Empfangsstrahls basierend auf den Laufzeiten durchführbar ist, wobei die Wertung angibt, ob der Empfangsstrahl in seinem Querschnitt von einem Einfachziel oder einem Mehrfachziel zurückkommende Teile des Sendestrahls aufweist.

Anordnungen von Single Photon Avalanche Photodioden, auch SPAD-Anordnung oder SPAD-Arrays genannt, sind in der Regel als Matrix-Struktur auf einem Chip angeordnet. Die SPAD-Array Technologie unterscheidet sich stark von der bipolaren APD-Technologie, insbesondere haben SPAD-Arrays eine niedrige Durchbruchspannung (Breakspannung) und können mittels konventioneller CMOS-Technologie gefertigt werden. Die Anordnungen oder Chips mit einer Photoempfindlichkeit im sichtbaren und nahen infrarot Spektralbereich werden auch als SiPM (Silicon Photomultiplier) bezeichnet. Die SiPM lösen allmählich die bisher eingesetzten Photomultiplier Tubes ab, insbesondere im sichtbaren und nahen ultravioletten Spektralbereich. SiPM haben eine hohe spektrale Empfindlichkeit im sichtbaren Wellenlängenbereich. Im Stand der Technik sind beispielsweise SPAD Arrays erhältlich, die bis in den Nahinfrarot-Bereich bis weit über 900 nm Wellenlänge sensitiv sind.

Kommerzielle SPAD-Arrays sind auch bei Wellenlängen zwischen 800 nm und 1800 nm erhältlich. Diese Sensoren bestehen hauptsächlich aus dem Halbleitermaterial InGaAs. Auch diese Sensoren weisen je nach Design eine externe oder interne Matrix-Struktur über die photo-sensitive Fläche auf. Distanzmesssysteme mit SPAD-Arrays in diesem Spektralbereich haben beispielsweise den Vorteil, dass das solare Hintergrundlicht (Tageslicht) gegenüber dem sichtbaren Wellenlängenbereich erheblich niedriger ist und dass dadurch dieser störende Lichtstrom eine Signaldetektion mittels SPAD-Arrays weniger beeinträchtigt.

Gemäss einer Ausführungsform ist die SPAD-Anordnung beispielsweise derart konfiguriert, dass sie mindestens eine der folgenden Eigenschaften aufweist: eine Photoempfindlichkeit für Wellenlängen zwischen 300 nm bis 1100 nm, insbesondere wobei die SPAD-Anordnung auf einem Silizium-Empfänger basiert, und eine Photoempfindlichkeit für Wellenlängen zwischen 700 nm bis 2000 nm, insbesondere wobei die SPAD-Anordnung auf einem InGaAs-Empfänger basiert.

Eine Besonderheit von SPAD-Anordnungen besteht beispielsweise darin, dass einzelne Subsets von Mikrozellen gesondert aktivierbar sind.

Trifft der Sendestrahl also z.B. auf zwei Objekte gleichzeitig, beispielsweise die linke Hälfte des Strahlenbündels auf ein erstes Objekt A und die rechte Hälfte des Strahlenbündels auf ein zweites Objekt B und befinden sich die Objekte A und B bei unterschiedlichen Distanzen, so wird das zurückkommende Licht mit eben diesen unterschiedlichen Distanzen auf den SPAD-Array geleitet. Die einzelnen SPAD -Mikrozellen triggern nun zeitlich unterschiedlich entsprechend der jeweiligen Entfernung der Objekte A und B.

Um dies einwandfrei detektieren zu können, wird beispielsweise eine sehr schnelle Elektronik mit GHz-Bandbreite benötigt, um die Pulse vom Objekt A und B zeitlich zu trennen, was aber sehr komplex ist, oder die Mikrozellen können örtlich sequentiell aktiviert werden, z.B. zuerst zeilen- und dann spaltenweise Aktivierung und Auslesung, um so auch die Position auf dem Empfänger und damit beispielsweise die Richtungen zu den Entfernungen der Objekte A und B abzufragen. Alternativ können die Mikrozellen zeitlich synchronisiert zur Sendesignalfolge nacheinander aktiviert werden, und zwar je zwei Teilbereiche (Binning) von Zeilen und von Spalten, wobei die Aktivierung und Auslesung vergleichbar zu einer Zellenadressierung einer Matrix abläuft, wobei durch die so erhaltenen Empfangsdaten die Richtungen und Entfernungen der Objekte ermittelt werden können. Dadurch können beispielsweise zwei oder mehrere Objekte die vom selben Laserstrahl getroffen werden auch dann identifiziert und gemessen werden, wenn ihr gegenseitiger Distanzabstand geringer als der Laserstrahldurchmesser ist. Zudem können Kanten und Ecken von Objekten mit höherer lateraler Ortsauflösung als der Laserstrahl selber erfasst und aufgelöst werden. Die empfangsseitige hohe Auflösung von Ort und Zeit mittels SPAD-Array funktioniert also auch für mehr als zwei Oberflächen. Mittels der tausenden oder zehntausenden von Mikrozellen und deren Zusammenfassung zu auslesbaren Teilbereichen (Domänen) mit zugeordneten Zeitmesschaltungen kann über den Querschnitt des durch einen Laserstrahl erzeugten Lichtfächers ein dreidimensionales Raumbild erfasst werden.

Anwendungen mit hoher Ortsauflösung sind beispielsweise für Lasertracker interessant, aber auch für Scanner beim Messen von Kanten, Ecken, Stufen, Schlitzen, Nuten und Bohrlöchern von Bauten wie Gebäudefassaden.

Eine weitere Besonderheit von SPAD-Arrays ist deren hohe Verstärkung. Daher werden diese bisher beispielsweise bei sehr schwachen optischen Signalen eingesetzt, wo lediglich 1 bis 50 Photonen auf den Sensor treffen. Solche luftgestützten Sensoren werden auch als SPL-LIDAR bezeichnet (SPL = "single photon lidar"). Bei nur wenigen Photonen ist das Distanzrauschen jedoch erheblich und beträgt typisch 10mm bis 100mm. Zudem wird die absolute Distanzmessgenauigkeit von der Signalstärke beeinflusst, dies insbesondere bei SPAD-Arrays mit wenigen Mikrozellen. Durch spezielle Massnahmen, beispielsweise eine Range Walk Kompensation und mit adäquat kurzen Laserpulsen von weniger als 500 ps kann hingegen ein Distanzrauschen von weit weniger as 1 mm erreicht werden, wodurch eine Messgenauigkeit von 0.1 mm erreicht wird. Dies entspricht einer typischen Zeitauflösung von einer Pico-Sekunde oder weniger.

Gemäss einer weiteren Ausführungsform ist beispielsweise der Transmitter konfiguriert, um den Sendestrahl als gepulste Lasermessstrahlung bereitzustellen, insbesondere mit einer einzelnen Pulsdauer von weniger als 500 Pikosekunden, im Speziellen von weniger als 100 Pikosekunden.

Da SPAD-Array-Sensoren hauptsächlich dazu ausgelegt sind, einzelne Photonen einwandfrei detektieren zu können, werden sie auch als "Multi Pixel Photon Counter" (MPPC) bezeichnet. Die SPAD-Arrays bestehen aus hunderten oder tausenden von Mikrozellen, wobei diese vielen Mikrozellen parallel zu einem oder mehreren Ausgangssignalen geschaltet und so in der Lage sind, tausenden oder hundertausenden von Photonen gleichzeitig zu empfangen. Zudem sind aufgrund der Parallelschaltung der vielen Mikrozellen zu Zellengruppen (Domänen) auch bei solarem Hintergrundlicht nach wie vor ausreichend freie Zellen für die Signalphotonen vorhanden.

Im Gegensatz zu den vergleichsweise teuren Photomultiplier-Tubes mit grossem Zeitjitter, sind die modernen SiPM-Sensoren kostengünstig und haben Zeitjitter im Pikosekunden- bis Sub-Pikosekunden-Bereich. Zudem werden die SiPM-Arrays mittels eines konventionellen CMOS-Technologieprozesses gefertigt, was zusätzlich die Integration von elektronischen Bauteilen und Schaltungen ermöglicht. Des Weitern haben SPADs und SPAD-Arrays gegenüber konventionellen APDs den Vorteil einer niedrigen Durchbruchspannung (break voltage). Bei Silizium-SPADs sind diese Spannungen typisch bei 25 bis 70V, was die Ansteuerung vereinfacht. Für die SPAD-Arrays aus dem Halbleitermaterial InGaAs gilt vergleichbares.

Die hohe Photoempfindlichkeit ist zurückzuführen auf den Avalanche-Mechanismus, wobei die einzelnen Mikrozellen des Arrays beispielsweise im Overvoltagebereich betrieben werden ("reverse voltage beyond the break voltage"), das heisst über der Durchbruchspannung (Breakspannung), bei welcher ein einzelnes Photon eine Lawine von Elektronen auslöst, wodurch das Signal je nach Einstellung stark verstärkt wird, z.B. eine Verstärkung bis zu einem Faktor von einer Million. Der dem Photon zugeordnete Strom ist wegen seiner Stärke leicht in ein Spannungssignal zu wandeln und ohne wesentliche Verstärkung einer Signalauswerteeinheit zuzuführen.

Ein SPAD-Array ist in der Lage mehrere Photonen gleichzeitig zu empfangen, wobei die Ströme der vielen Mikrozellen auf dem Sensorchip addiert werden können und anschliessend beispielsweise über einen Widerstand oder einen Transimpedanzverstärker in ein Spannungssignal gewandelt werden. Der SPAD-Array kann beispielsweise derart konfiguriert sein, z.B. mit mehr als zehntausend Mikrozellen, dass er sich wie ein analoger Photosensor verhält, wobei die Kennlinie beispielsweise bei schwachen Empfangssignalen annähernd proportional zur Intensität des einfallenden Laserimpulses ist.

In der Literatur wird unterschieden zwischen SPAD-Array Operationen im Linear-Modus, Geiger-Modus und SPL-Modus (SPL, "Single Photon Lidar").

Im Linear-Modus unterhalb der Durchbruchspannung tritt eine sperrspannungs- und temperaturabhängige Verstärkung auf und SPAD-Arrays können beispielsweise zum Aufbau hochempfindlicher Photoempfänger mit strahlungsleistungsproportionaler Ausgangsspannung verwendet werden.

Im Geiger-Modus und SPL-Modus, d.h. jeweils im Betrieb oberhalb der Durchbruchspannung können SPAD und SPAD-Arrays für die Einzelphotonzählung verwendet werden. Bei den SPADs erzeugt im Geiger-Modus jedes einzelne Pixel ein Ausgangssignal, wobei die Elektronenlawine durch genau ein Photon ausgelöst wird. Trifft ein Photonenpaket aus mehreren Photonen ein, so wird kein grösseres Signal gemessen. Es ist daher keine Amplitudeninformation vorhanden.

Im Geiger-Modus erzeugt ein einfallendes Photonenpaket lediglich ein (binäres) Eventsignal, welches nicht proportional zur Anzahl Photonen im Photonenpaket ist.

Unter SPL-Modus versteht man einen im Geiger Mode betriebenen SPAD-Array, wobei viele Mikrozellen parallel zu einem Ausgangssignal geschaltet sind. Bei eintreffenden Photonenpaketen mit nur wenigen Photonen addieren sich die einzelnen Lawinen praktisch linear und die Amplitude des Ausgangssignals ist daher proportional zur Anzahl erfasster Photonen.

Die Erholungszeit der Mikrozellen nach einem photonischen Trigger ist nicht Null sondern beispielsweise zwischen 5-50 Nanosekunden, wodurch die scheinbare Empfindlichkeit des SPAD-Arrays für nachfolgend eintreffende Photonen reduziert wird. Dies hat aber beispielsweise den Vorteil, dass der Sensor einen Signalstärkenbereich mit hoher Dynamik erfassen kann. Diese Nichtlinearität ist bei SPAD-Arrays mit einer grossen Anzahl von Mikrozellen (>1000) monoton und führt einerseits zu einer Amplitudenkompression zwischen Eingangs- und Ausgangssignal und anderseits, bei grösser werdendem Eingangssignal, zu einem abgeschwächt zunehmendem Ausgangssignal. Interessanterweise sättigt das Ausgangssignal von SPAD-Arrays mit einer hohen Anzahl von Mikrozellen (>1000) nicht vollständig, so dass auch bei einem Empfangsimpuls mit einer sehr hohen Photonenzahl von weit über einer Million eine Amplitudenänderung messbar ist.

Ein SPAD-Array mit ausreichender Zellenzahl erfasst über einen grossen Dynamikbereich die Empfangssignalamplitude und komprimiert gewissermassen die Eingangs-Amplitude von sehr kleinen bis sehr grossen Signalen. Der SPAD Array übersteuert praktisch nie, dies auch bei sehr grossen Signalen nicht, z.B. auch dann nicht, wenn die Strahlung von einem winkelpräzisen Retroreflektor zurückgeworfen wird. Bei einer Photonenzahl von 10⁹ nähert sich das Ausgangssignal des SPAD-Arrays asymptotisch einer maximalen Grenzspannung, welche angepasst ist an die nachfolgende Verstärkerschaltung und garantiert, dass die nachfolgende Elektronik bis zur Zeitmessschaltung nicht übersteuert wird. Dadurch ist eine genaue Distanzmessung über einen hohen Dynamikbereich erst möglich.

Bei der Laserdistanzmessung auf unterschiedliche Distanzen und variierende Oberflächen kann die Anzahl der Photonen beispielsweise variieren von weniger als 10 bis über 10⁹. SPAD-Arrays weisen demgegenüber einen Kompressionsfaktor der gemessenen Signalamplitude aus, der gegenüber der tatsächlichen Signalamplitude mindestens 10⁴, typischerweise 10⁸, beträgt. Mit SPAD-Arrays kann daher sowohl auf schwarze diffuse Targets als auch auf Retroreflektoren gemessen werden, ohne dass die Empfangseinheit eine Signalregelung benötigt. Durch die grosse Verstärkung weisen SPAD-Arrays zudem beispielsweise ein niedriges Rauschen auf und SPAD-Arrays mit hohem Füllfaktor zeigen ein für Distanzmessungen geeignetes Signal-Rausch-Verhältnis (SNR, "Signal-to-Noise-Ratio"). Je mehr Mikrozellen ein SPAD-Array aufweist, umso grösser ist das zugängliche SNR.

Der Empfänger kann gemäss einer weiteren Ausführungsform derart konfiguriert sein, dass der Sensor ausgebildet ist als Anordnung von Single Photon Avalanche Photodioden (SPAD-Anordnung) die eine Vielzahl von Mikrozellen aufweist und derart konfiguriert ist, dass die Mikrozellen einzeln und/oder in Mikrozellengruppen auslesbar sind und dadurch einzeln auslesbare Teilbereiche des Empfängers definierbar sind, und/oder der Empfänger mehrere SPAD-Anordnungen aufweist, wobei die mehreren SPAD-Anordnungen derart konfiguriert sind, dass einzeln auslesbare Teilbereiche des Empfängers jeweils derart definierbar sind, dass sie auf Mikrozellen einer einzelnen SPAD-Anordnung oder auf Mikrozellen einer Kombination von SPAD-Anordnungen der mehreren SPAD-Anordnungen basieren. Oft werden bei Anordnungen von mehreren SPAD-Arrays (SPAD-Anordnungen) die einzelnen Arrays als Pixel bezeichnet, obwohl jedes dieser Pixel selber aus hunderten bis zehntausenden von Mikrozellen besteht.

Gemäss der vorliegenden Erfindung ist die Recheneinheit konfiguriert, basierend auf mit den Teilbereichen des Empfängers erfassten Querschnittsanteilen des Empfangsstrahls eine Wertung von mit dem Sendestrahl angestrahlten Oberflächen des Zielobjekts durchzuführen, wobei die Wertung zumindest auf einem Signalstärkenvergleich von mit unterschiedlichen Teilbereichen erfassten Empfangssignalen basiert.

Gemäss einer weiteren Ausführungsform basiert die Wertung des Weiteren auf einem Laufzeitenvergleich von Laufzeiten des Satzes von Laufzeiten.

Die Teilbereiche (Domänen) des Empfängers, welche beispielsweise dezidierten Teilen des Sendestrahlquersschnitts zugeordnet sind, liefern also Informationen oder Empfangsdaten über die vom Laserstrahl angestrahlten Objektoberflächen, insbesondere als Ergebnis die Distanzen und die zugehörigen Reflexionssignalstärken.

So können beispielsweise in einem 3D-Scan Oberflächen mit unterschiedlichen Streueigenschaften erkannt und

gegebenenfalls markiert werden. Durch eine Analyse des Laufzeitunterschieds sowie der jeweiligen Signalstärke können zum Beispiel gleich entfernte Zielpunkte, also Zielpunkte welche dieselbe Signallaufzeit aufweisen, auf unterschiedlichen Oberflächen erkannt werden.

Die Empfangsdaten können beispielsweise derart erfasst werden, dass die Distanz zum Zielpunkt basierend auf den Empfangsdaten ableitbar ist, d.h. dass die Empfangsdaten als Distanzmessdaten erfasst werden, oder es können basierend auf der Wertung Teilbereiche des Empfängers für ein Erfassen von spezifischen Distanzmessdaten objektangepasst definiert werden.

Die Teilbereiche (Domänen) der Empfangseinheit können für eine optimale Auflösung der Objektoberfläche beispielsweise entsprechend unter der Anzielrichtung erkennbaren Linien oder Konturen wie Stufen, Ränder, Kanten, Rohre etc. entsprechend konfiguriert werden. Bei unregelmässigen Konturen ist eher eine allgemeine Konfigurationsschaltung von Mikrozellen zu Zellengruppen (Domänen) vorteilhaft und die Zusammenschaltung erfolgt dann in Zeilen- und Spaltenform. Jeweils eine Zeile und eine Spalte werden je einer Distanzmesseinheit zugeführt und ausgewertet. Anschliessend wird die Spalte der aktivierten Zellen weiter geschoben und die nächste Distanzmessung unter dieser Winkeleinstellung vorgenommen. Dies geht so weiter bis die ganze Matrix abgefragt ist. Dieses Auslesen kann beispielsweise auch parallelisiert sein, wobei dies bedingt, dass die Vorrichtung weitere Distanzmesseinheiten umfasst.

Erfindungsgemäss ist der Empfänger und die Recheneinheit konfiguriert, die Wertung beim Ableiten der Distanz zum

Zielobjekt zu berücksichtigen und basierend auf der Wertung die aus dem Empfangsstrahl abgeleitete Distanz zum Zielobjekt als fehlerhaft zu kennzeichnen.

Gemäss einer weiteren Ausführungsform werden basierend auf der Wertung Distanzmessdaten welche mit unterschiedlichen Teilbereichen des Empfängers erfasst werden unterschiedlich gewichtet, oder es wird basierend auf der Wertung für das Zielobjekt ein weiterer Satz von angepassten einzeln auslesbaren Teilbereichen des Empfängers definiert.

Der erfinderische Distanzmesser kann also aufgrund von Mehrfachzielen fehlerhafte Signale erkennen und beispielsweise korrigieren oder verwerfen, oder aufgrund eines Kombinationskriteriums wie z.B. einem Intensitätsverhältnis die einzelnen Teilsignale, respektive Distanzanteile kombinieren und für die räumliche Anzielrichtung der Laserachse eine korrigierte Distanz ausgeben.

Insbesondere können einzelnen Teilbereichen des Empfängers unterschiedliche Winkel- oder Zielrichtungen zugeordnet sein, wodurch eine Distanzmessung mit einer lateralen räumlichen Auflösung grösser als der durch den totalen Strahlquerschnitt des Sendestrahls definierten lateralen räumlichen Auflösung ermöglicht wird.

Gemäss einer weiteren Ausführungsform sind der Empfänger und die Recheneinheit beispielsweise derart konfiguriert, dass einzeln auslesbaren Teilbereichen des Empfängers jeweils ein definierter Querschnittsanteil des Sendestrahls, d.h. ein Anteil seiner lateralen Ausdehnung, zuordenbar ist, insbesondere wobei dem Querschnittsanteil eine definierte Zielrichtung relativ zur Zielachse zuordenbar ist.

Zum Beispiel kann der erfinderische Distanzmesser in einem geodätischen oder industriellen Messgerät derart verbaut sein, dass die einzeln auslesbaren Teilbereiche (Domänen) des SPAD-Empfängers zum Winkelkoordinatensystem des geodätischen oder industriellen Messgeräts kalibriert sind. Die Empfangseinheit des Distanzmessgeräts umfasst daher eine Anzahl von Empfangsenheiten mit räumlicher Richtungsauflösung die wenigstens einem Laserstrahl zugeordnet sind.

Bei Verwendung einer Fixfokus-Empfangsoptik verändert sich zwar der empfangene Lichtfleck des Messtrahls in seiner Grösse (Ausdehnung) auf dem SPAD-Array in Funktion der Messdistanz, wobei aber beispielsweise mittels einer ersten groben ortsaufgelösten den Domänen zugeordneten Distanzmessung und einer anschliessenden räumlichen Entfaltung mit Berücksichtigung der Transferfunktion des Empfangskanals eine erhöhte räumliche Auflösung der Distanzen der durch den Laser angestrahlten Objektflächen bewirkt werden kann, wodurch ein dreidimensionales Raumbild gewonnen werden kann.

Zum Beispiel bezieht sich eine weitere Ausführungsform der Erfindung darauf, dass der Empfänger und die Recheneinheit konfiguriert sind zum Ableiten von jeweils den Teilbereichen des Empfängers zugeordneten Rohdistanzdaten, zum Durchführen eines Entfaltungsalgorithmus, beispielsweise basierend auf einem optischen Abbildungsmodell mit Berücksichtigung der Empfängeroptik und gemessenen Rohdistanzen, zum Ableiten eines Satzes von Feindistanzen, basierend auf den Rohdistanzdaten, im Speziellen wobei für jeden Teilbereich des Satzes von Teilbereichen eine Feindistanz abgeleitet wird, und zum Zuordnen von Feindistanzen zu definierten Zielrichtungen relativ zur Zielachse. Die den Teilbereichen zugeordneten Rohdistanzdaten können beispielsweise auch zusätzliche Messdaten wie Signalamplituden, zeitliche Pulsbreiten oder Pulsformen aufweisen. Der Entfaltungsalgorithmus schliesst bei der Bestimmung der Feindistanzen auch die Rohdistanzdaten der benachbarten Teilbereiche ein.

Der Satz von Feindistanzen definiert also eine Distanzmessung mit einer lateralen räumlichen Auflösung grösser als der durch den totalen Strahlquerschnitt des Sendestrahls definierten lateralen räumlichen Auflösung. Ferner kann beispielsweise anhand eines Kombinationsalgorithmus mit Einbindung der zu den Zielrichtungen (Zellengruppen) ermittelten Feindistanzen und Signalstärken die wahre Distanz auf der Laserachse ermittelt und ausgeben werden.

Beispielsweise kann die Recheneinheit konfiguriert sein zum Durchführen eines automatisierten vorprogrammierten Messvorgangs aufweisend die Schritte: Ableiten des Satzes von Rohdistanzen, Ableiten des Satzes von Feindistanzen, und Zuordnen von Feindistanzen zu definierten Zielrichtungen relativ zur Zielachse.

Das Ableiten der den Zielrichtungen zugeordneten Feindistanzen kann beispielsweise auf mindestens einem von folgendem basieren: einer Lookup-Tabelle die eine Korrelation zwischen einer Rohdistanz und einem Strahldurchmesser des auf dem Empfänger abgebildeten Sendestrahls ermöglicht, und eine Funktion, welche basierend auf den Rohdistanzen als Funktionsparameter einen Strahldurchmesser des auf dem Empfänger abgebildeten Sendestrahls ausgibt.

Um die Anzahl der Ausgangssignale zu reduzieren und dadurch beispielsweise die Distanzmesseinheit zu vereinfachen und Strom zu sparen, können die Mikrozellen zu wenigen Teilbereichen zusammen gefasst werden, beispielsweise in vier Quadranten mit je einem Signalausgang. An jedem Signalausgang ist dann beispielsweise eine TDC-Zeitmesseinheit implementiert und einem FPGA zugeordnet.

Beispielsweise kann der Empfänger, insbesondere der SPAD-Array, derart konfiguriert sein, dass die Sensorfläche elektronisch in fest definierte Teilbereiche aufgeteilt ist, z.B. vier unterschiedliche Teilbereiche in Quadrantenaufteilung, beispielsweise wobei jedem Teilbereich eine unterschiedliche Zielrichtung zugeordnet wird, insbesondere wobei sich die einzelnen Teilbereiche gegenseitig nicht überlappen.

Gemäss einer weiteren Ausführungsform ist der Empfänger derart konfiguriert, beispielsweise mittels einer Filtermaske mit bezüglich Transmissionsverhalten unterschiedlichen Filtern, im Speziellen einer RG-Maske, einer RGB-Maske oder einer RGBNir-Maske, dass die Sensorfläche Bereiche mit zueinander unterschiedlicher spektraler Photoempfindlichkeit aufweist, insbesondere wobei der Transmitter konfiguriert ist, den Sendestrahl über einen definierten auf die Filter der Filtermaske abgestimmten Wellenlängenbereich zu erzeugen, beispielsweise mittels Erzeugen von koaxialen Laserstrahlen unterschiedlicher Wellenlänge. Zum Beispiel wird empfangsseitig je einem Subset von Mikrozellen des SPAD-Arrays jeweils ein blauer Laser, ein grüner Laser, ein roter Laser und eventuell ein infraroter Laser zugeordnet.

Die Wertung der Empfangsdaten kann also bezüglich des mit Sensorbereichen unterschiedlicher spektraler Photoempfindlichkeit erfassten Empfangsstrahls erfolgen, wobei die die Recheneinheit beispielsweise konfiguriert ist, basierend auf den Bereichen mit zueinander unterschiedlicher spektraler Photoempfindlichkeit, beim Durchführen der Wertung, insbesondere beim Ableiten der Feindistanzen, Beugungseffekte des Specklefelds zu berücksichtigen.

Zum Beispiel kann mittels einer RG-Maske, RGB-Maske oder RGBNir-Maske auf den Pixeln, d.h. jeweils einem Subset von Mikrozellen des SPAD-Arrays oder jeweils einem einzelnen SPAD-Array bei Verwendung mehrerer einzelner SPAD-Arrays als Sensorfläche, mit mehreren Farbkanälen gleichzeitig gemessen werden. Die Laserstrahlen oder Laserbündel unterschiedlicher Wellenlänge sind typischerweise von gaussartigem Profil und sind lateral nicht scharf berandet. Eine scharfe räumliche Trennung in lateraler Richtung und damit eine Ortsauflösung im Objektraum erfolgt empfängerseitig einerseits durch die grosse optische Empfängeröffnung anderseits durch die wellenlängenkodierten Teilbereiche des SPAD-Arrays. Auch wenn die wenigstens zwei Laserbündel unterschiedlicher Wellenlänge räumlich überlappen, erzeugen die farbkodierten Teilbereiche eine scharfe räumliche Trennung und damit eine höhere räumliche Auflösung. Beispielsweise sind je nach Auslegung des RGBNir-Patterns auf dem SPAD-Array neben der Erhöhung der räumlichen Auflösung auch chromatische Texturen an Objekten erkennbar, wodurch der Einfluss von Laserspeckles reduzierbar und eine Distanzmessung mit einer Elimination der atmosphärischen Dispersion ermöglicht wird. Weiter kann beispielsweise eine laterale Ortsauflösung auch bei gleich entfernten Flächen mit unterschiedlichem spektralem Reflexionsvermögen erfolgen.

Die Lasersignale eines Distanzmessers sind in der Regel mit einer Impulskodierung beaufschlagt. Typische Impulsraten sind zwischen kHz bis GHz. Experimente haben gezeigt, dass mit SPAD-Arrays bei Spannungen im Overbreakbetrieb solche Signale gut empfangen werden können. Auch Pulspakete (Bursts) sind eindeutig und beinahe rauschfrei mit SPAD-Arrays zu empfangen. Dies beispielsweise auch dann, wenn die Erholungszeit (Recovery Time) der Mikrozellen mit zehn Nanosekunden recht lang ist. Aufgrund des analogen Aufbaus von SPAD-Arrays kann auch ein beispielsweise durch Umgebungslicht präsenter Photostrom empfangen werden. Das Lasersignal ist dann dem elektrischen Photostrom des Umgebungslichts überlagert. Zum Beispiel wird der durch den Laserpuls erzeugte Stromstoss am Ausgang des SPAD-Arrays noch Hochpass gefiltert, damit die langsame hintere Signalflanke verkürzt wird. Der Ausgangsimpuls wird dadurch zu einem kurzen Signalimpuls, z.B. mit einer Pulsdauer kleiner als eine Nanosekunde. Solche kurzen Pulse mit steilen Flanken sind für eine präzise Zeit- und somit auch Distanzmessung geeignet.

Ohne Differenzierer, z.B. ein Hochpass-Filter, hat das Ausgangssignal eines SPAD-Arrays im Wesentlichen die Form einer Schrittfunktion mit sehr steilem Anstieg (< 200 ps) und langsamen Abfall (>>10 ns). Mit einer elektrischen Differenziereinheit ergeben sich beispielsweise die Vorteile einer kurzen Pulsform und die Anstiegsgeschwindigkeit der Anstiegsflanke der SPAD-Antwort geht über in eine Pulsbreite, wodurch beispielsweise eine Pulsbreitenmessung ermöglicht wird. Je stärker der Laserpuls ist, umso steiler ist die Anstiegsflanke vor dem Hochpass-Filter (Differenzierer), wodurch die Pulsbreite nach dem Differenzieren amplitudenabhängig wird. Dadurch ist beispielsweise eine Range Walk Kompensation möglich. Die Verwendung eines Differenzierers hat jedoch keinen Einfluss auf die Erholungszeit des SPAD-Arrays.

Weiter wurden bereits erste Realisierungsversuche unternommen, um mehr elektronische Funktionalität in die SPAD-Arrays zu integrieren. Beispielsweise wurden bereits jeder Mikrozelle zugeordnete Zeitmesschaltungen ("TOFcircuitries") realisiert. Diese messen die Laufzeit (TOF, "Time-of-Flight"). Es existieren zum Beispiel SPAD-Array Implementierungen, wobei nahe bei den Mikrozellen eine präzise Photonenzählung integriert ist, die ohne einen nachgeschalteten Analog-Digital-Wandler (ADC, "Analog-Digital-Converter") auskommt. Zudem kann beispielsweise bei jeder Mikrozelle je eine Zeitmesschaltung (TDC, "time to digital converter") integriert sein. Als Ausgang des SPAD-Arrays wird ferner beispielsweise ein digitales Interface verwendet. Solche Bausteine sind vollständig digital und erfordern kein "mixed signal processing" bei der CMOS-Herstellung.

In einer weiteren Ausführungsform weist der Distanzmesser eine Empfangsschaltung auf, die konfiguriert ist für eine Verarbeitung des Empfangssignals und zur Bereitstellung von mindestens einem von folgendem: eine Wellenform-Digitalisierung des Empfangssignals mit sub-Picosekunden genauer Zeitauflösung, eine Zeitmessschaltung mit einem Zeit-Digital-Konverter, und eine Phasenmessung des Empfangssignals bezüglich eines durch den Sendestrahl bereitgestellten Sendesignals, beispielsweise wobei die Empfangsschaltung einen Differenzierer aufweist, insbesondere einen elektrischen Hochpass-Filter.

Bei mehrkanaligen Distanzmesseinheiten (Parallelisierung von Distanzmessungen), bestehend aus einem Multibeam-Emitter und Receiver bieten sich beispielsweise TDC-Zeitmessschaltungen in einem FPGA ("Field Programmable Gate Array") als sehr kompakte und ebenfalls parallelisierbare Auswerteeinheit an. Mit einem TDC kann ferner eine Pulsbreitenmessung erfolgen, jedoch keine Amplitudenmessung. Eine Amplitudenmessung erfordert beispielsweise eine zusätzliche Messeinheit.

Demgegenüber ist mittels Wellenform-Digitalisierung (WFD) beispielsweise eine höhere Zeitauflösung als mit bisherigen TDC und zusätzlich eine einfache Amplitudenmessung möglich.

Einerseits ist man ferner zum Beispiel daran interessiert, dass möglichst alle Mikrozellen eines SPAD-Arrays eine gleichmässige Signalstrahlung zugeführt bekommen, wodurch sich der SPAD-Array ähnlich verhält wie eine Avalanche-Photodiode (APD) im Linearmodus. Anderseits zeigen SPAD-Arrays ein so genanntes Fehlrichtdiagramm, wobei die Laufzeit der Signalantwort abhängig ist von der Position des Lichtflecks auf dem SPAD-Array. Zum Beispiel sind die Mikrozellen am Rand des SPAD-Arrays langsamer als in der Mitte. Durch eine gleichmässige Beleuchtung aller Mikrozellen kann dieser Laufzeiteffekt herausgemittelt werden. Als Lichtmischer bieten sich besonders Lichtleiter an, weil durch diese kein Licht verloren geht.

In einer weiteren Ausführungsform weist der Distanzmesser eine Faserkopplung auf und ist derart konfiguriert, dass zurückkommende Teile des Sendestrahls mittels einer Lichtmischung gleichmässig auf den Sensor verteilt werden, insbesondere wobei die Lichtmischung auf mindestens einem von einem Diffusor, einem faseroptischen Lichtleiterstab, einem Lichtleiter mit Scrambler, einer Lichtleitfaser, einer Vierkantfaser, einem Lichttrichter, einer Blende, und einer Defokussierung basiert.

Der erfindungsgemässe Distanzmesser wird nachfolgend anhand von in den Zeichnungen schematisch dargestellten Ausführungsbeispielen rein beispielhaft näher beschrieben. Gleiche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen.

Im Einzelnen zeigen
- Fig. 1a,b:: Prinzipdarstellung eines elektro-optischen Distanzmessers nach dem Pulslaufzeitprinzip;
- Fig. 2a,b:: Prinzipdarstellung des Problems von durch den Sendestrahl erfassten Mehrfachzielen eines elektro-optischen Distanzmessers;
- Fig. 3:: beispielhafte Schaltung für eine erfinderische Distanzmessung mittels einer Kombination eines Sensors basierend auf wenigstens einem SPAD-Array mit einer Wellenform-Digitalisierung (WFD) ;
- Fig.4:: beispielhafte Schaltung für eine erfinderische Distanzmessung mittels einer Kombination eines Sensors basierend auf einem oder mehreren SPAD-Arrays mit einer TDC-Zeitmessschaltung implementiert in einem FPGA;
- Fig. 5:: schematische Darstellung von bei einer Fixfokus-Empfangsoptik auftretenden Zerstreuungskreisen des empfangenen Lichtflecks des Empfangsstrahls auf dem Empfänger;
- Fig. 6a-c:: beispielhafte Lichtverteilung auf dem Empfänger als Funktion der Hyperfokaldistanz;
- Fig. 7a-c:: schematische SPAD-Anordnungen, jeweils mit unterschiedlichen matrixartigen Teilbereichen (Domänen);
- Fig. 8a,b:: schematische SPAD-Anordnungen mit verschiedenen Multicolor-Masken;
- Fig. 9a,b:: ein Erkennen einer Kantenlinie durch zeilen- und spaltenartige Aktivierung und Auslesung von Mikrozellen;
- Fig. 10:: Schematische Darstellung eines faseroptischen Lichtleiters mit Lichtmischer.

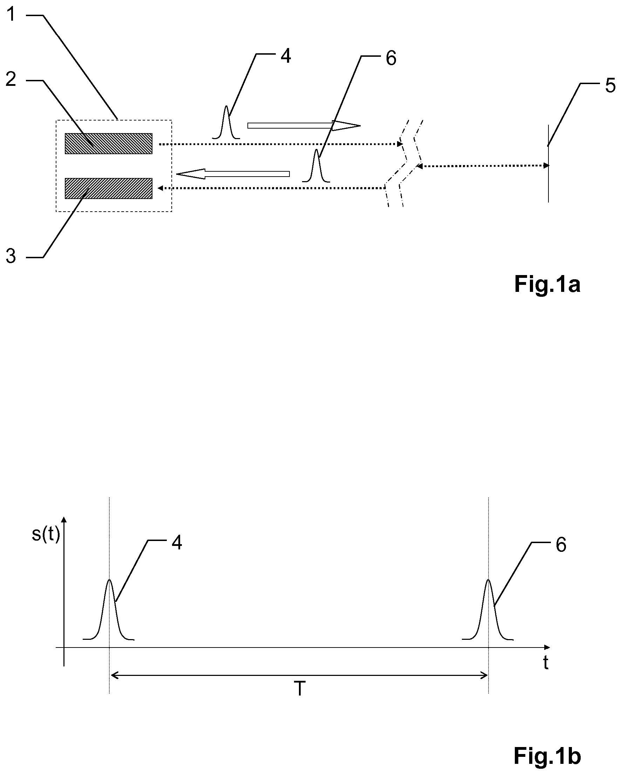

**Figur 1a** zeigt eine Prinzipdarstellung eines elektro-optischen Distanzmessers 1 des Stands der Technik nach dem Pulslaufzeitprinzip. In dem Distanzmesser 1 sind ein Sender 2 und ein Empfänger 3 angeordnet. Der Sender 2 emittiert einen Lichtpuls 4, der nach der Reflektion bzw. Rückstreuung an einem Ziel 5, z.B. ein kooperatives Ziel wie beispielsweise ein Retroreflektor oder ein unkooperatives Ziel wie beispielsweise eine natürliche Oberfläche, wieder als zurückkommender Licht- oder Strahlungspuls 6 vom Empfänger 3 detektiert wird. Anstelle der Lichtpulse kann erfindungsgemäss beispielsweise auch ein kontinuierlich moduliertes Sendesignal verwendet werden.

Wie in **Figur 1b** in Prinzipdarstellung gezeigt, wird die Entfernung aus der Laufzeit T als zeitliche Differenz zwischen dem Startzeitpunkt des Aussendens eines Lichtpulses 4 und dem Empfangszeitpunkt des zurückkommenden Lichtpulses 6 ermittelt. Bei einer linearen Photodiode, beispielsweise eine APD betriebene Diode im Linear-Modus, wird das optische Signal 6 in ein entsprechendes elektronisches Signal gewandelt. Die Ermittlung des Empfangszeitpunktes dieses elektronischen Signals erfolgt dabei durch die Auswertung eines Merkmals des Signalimpulses s(t), z.B. durch das Passieren einer Signalschwelle oder durch Schwerpunktbestimmung des integrierten Pulsverlaufs. Beim Schwellwertverfahren sind auch andere Methoden zur Messung der Laufzeit T nutzbar, wie beispielsweise die Umwandlung des Empfangssignals in ein bipolares Signal und anschliessende Bestimmung des Nulldurchgangs.

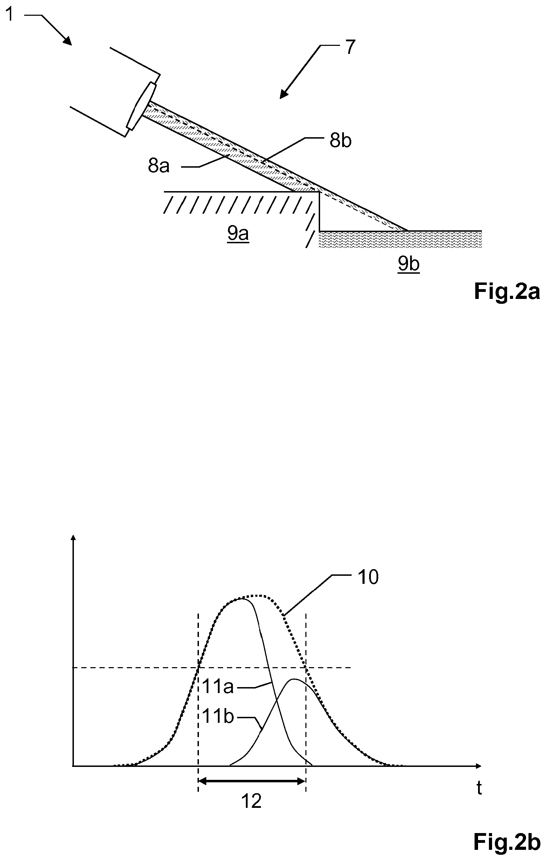

**Figuren 2a** und **2b** zeigen beispielhaft die Problematik von durch den Sendestrahl 7 eines Laserdistanzmessers 1 erfassten Mehrfachzielen.

Durch die endliche laterale Ausdehnung des senderseitigen Lasermessstrahls 7 ist die laterale Auflösung am Zielobjekt in der Regel begrenzt und es können bedingt durch den endlichen lateralen Strahldurchmesser Mehrfachziele erfasst werden, beispielsweise wie in Figur 2a dargestellt Doppelziele wenn der Sendestrahl 7 über eine Kante oder Stufe fährt. Der zurückkommende Sendestrahl enthält dann die Laufzeit-Information bezüglich zwei unterschiedlichen Anmessdistanzen 8a,8b. Ferner können die von den beiden Strahlteilen 8a,8b erfassten Oberflächen 9a,9b unterschiedliche Reflektivitäten oder spektrale Eigenschaften aufweisen, wodurch beispielsweise ein Signal dominieren kann.

Die beiden Strahlanteile 8a,8b erzeugen dann beispielsweise wie in Figur 2b gezeigt ein bezüglich der Zeitachse t pulsverbreitertes WFD-Empfangssignal 10, basierend auf dem Teilsignal 11a bezüglich der ersten Oberfläche 9a und dem Teilsignal 11b bezüglich der zweiten Oberfläche 9b.

Zwar kann beispielsweise ein Distanzmesser basierend auf der WFD-Methode Mehrfachziele erkennen und gegebenenfalls auflösen, falls die den Zielen zugeordneten Empfangsimpulse 11a,11b ausreichend weit auseinander liegen. Die Fähigkeit, Mehrfachobjekte zu trennen, hängt jedoch beispielsweise von der Empfängerbandbreite ab. Bei Kanten, Stufen und Ecken entsteht daher beispielsweise ein Overlapp der Returnpulse und die einzelnen Distanzen können nicht ausreichend genau gemessen werden. Die WFD-Methode erkennt dann zwar eine Anomalie des Empfangspulses in Form einer Pulsverbreiterung 12, aber eine ausreichend genaue Zerlegung in zwei Einzelpulse 11a,11b ist nicht möglich.

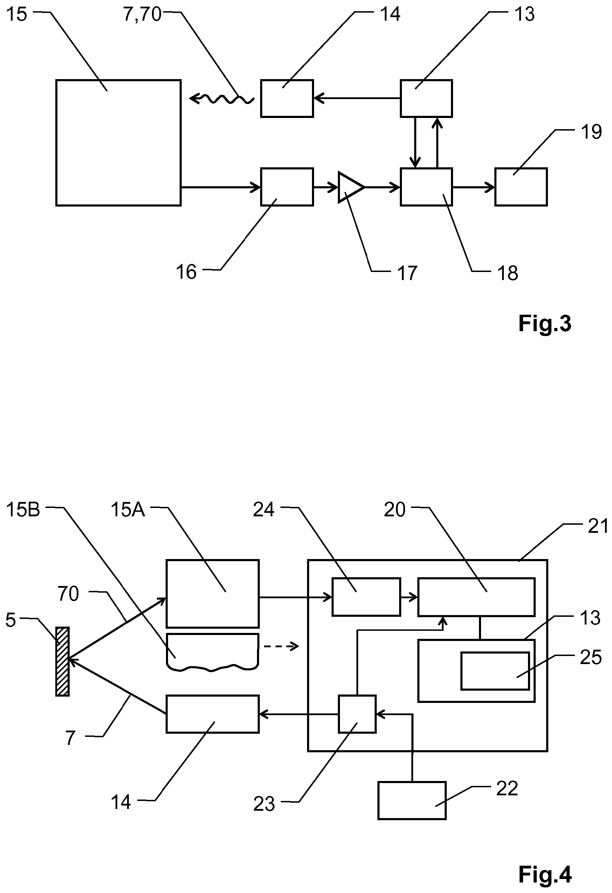

**Figur 3** zeigt beispielhaft eine Schaltung für eine erfinderische Distanzmessung mittels einer Kombination eines Sensors basierend auf einem SPAD-Array mit einer Wellenform-Digitalisierung (WFD).

Zum Beispiel umfasst der erfinderische Distanzmesser einen durch eine Steuereinheit 13 angesteuerten Laser 14 zur Emission einer pulsierten Lasermessstrahlung 7, welche nach der Reflektion bzw. Rückstreuung an einem Ziel (nicht gezeigt) als Empfangsstrahlung 70 auf einen ein SPAD-Array 15 aufweisenden Detektor trifft. Der Detektor ist konfiguriert als "Multi-Pixel-Receiver", wobei mehrere Signalausgänge vorhanden sind, indem Teilmengen (Domänen) aller Mikrozellen zu jeweils einem zugehörigen Ausgangssignal zusammengefasst sind. "Pixel" bezieht sich hier also auf durch den Sendestrahl erfasste "Zielpixel".

Die vom SPAD-Array 15 erzeugten wenigstens zwei (analogen) Empfangssignale werden beispielsweise je einem Differenzierer 16, z.B. einem Hochpass-Filter, zugeführt und anschliessend, beispielsweise über einen Verstärker 17, an eine Wellenform-Digitalisierungseinheit 18 weitergeleitet, wodurch beispielsweise eine hohe Zeitauflösung und eine Bestimmung von Parametern wie beispielsweise Pulsbreite, Pulsform und Signalamplitude ermöglicht wird. Die wenigstens zwei vom SPAD-Array ausgegebenen Empfangssignale bedingen eine Multi-Kanal-Distanzmessanordnung oder eine Multiplexereinheit, um die Empfangssignale zeitlich nacheinander einer einzigen Distanzmesseinheit zuzuführen.

Erfindungsgemäss wird den wenigstens zwei Empfangssignalen 11a,11b (siehe Fig. 2b) beispielsweise jeweils eine Laufzeit zugeordnet und basierend auf einem Vergleich der Laufzeiten kann erkannt werden, ob der Empfangsstrahl 70 in seiner lateralen Ausdehnung von einem Einfachziel oder einem Mehrfachziel zurückkommende Teile des Sendestrahls 7 aufweist.

Eine Ausführungsform der Wellenform-Digitalisierung (WFD) basiert beispielsweise auf einer Kombination von einer initialen Messsignaldetektion anhand der Schwellwertmethode mit einer Signalabtastung mit nachgeschalteter Signalverarbeitung zur präzisen Identifikation der Amplitude des Messsignals.

Zum Beispiel erfolgt die Messignaldetektion mittels einer (insbesondere analogen) Komparator-Stufe zur Erzeugung eines Komparator-Ausgangssignals abhängig von einer Erfüllung eines Kriteriums durch das eingehende Messsignal.

Alternativ kann auch das Signal während der gesamten Zeitdauer zwischen zwei Sendepulsen abgetastet und aufgenommen und anschliessend auf einem FPGA prozessiert werden.

Die Signalabtastung kann beispielsweise mittels einer ADC-Digitalisierungs-Stufe (ADC, "Analog-to-Digital-Converter") erfolgen, wobei mit einer definierten Abtastrate eine Abtastung eines der Digitalisierungs-Stufe zugeführten Eingangssignals und somit eine Wandlung in abgetastete digitalisierte Werte erfolgt.

Die bereinigten und beispielsweise Range Walk kompensierten Distanzmessdaten werden anschliessend beispielsweise an eine Speichereinheit 19 gesendet und einem Benutzer zur Verfügung gestellt.

**Figur 4** zeigt beispielhaft eine Schaltung für eine erfinderische Distanzmessung mittels einer Kombination eines Sensors basierend auf einem oder mehreren SPAD-Arrays 15A,15B mit einer Zeitmessschaltung bestehend aus einer TDC-Zeitmessschaltung 20 ("Time-to-Digital-Converter") implementiert in einem FPGA 21 ("Field Programmable Gate Array").

SPAD-Arrays sind wegen ihrer grossen und rauscharmen Signalverstärkung für Multi-Kanal-Anordnungen (Multibeam) geeignet. Erfindungsgemäss können mittels "Multi-Pixel-Receiver", d.h. ein oder mehrere SPAD-Arrays mit mehreren Signalausgängen, die jeweils einer Mikrozellen-Domäne zugeordnet sind, für jeweils eine Einzelpunktmessung erfasste Mehrfachziele im Empfangsstrahl erkannt werden. Der Begriff "Einzelpunktmessung" wird dabei so verstanden, dass für eine unter einer eindimensionalen linienförmigen Anzielrichtung getroffene Objektoberfläche der Abstand möglichst exakt gemessen wird.

Desweiteren können beispielsweise auch die erfinderischen "Einzelpunktmessungen" für eine Mehrkanal-Messung (Multibeam) parallelisiert werden. Zum Beispiel bietet sich bei mehrkanaligen Distanzmessern, bestehend aus für eine Parallelisierung der Distanzmessungen konfiguriertem Multibeam-Emitter und Empfänger, eine TDC-Zeitmesschaltung im FPGA als kompakte und ebenfalls parallelisierbare Auswerteeinheit an.

Senderseitig kann beispielsweise ein mit Laserdioden "seeded" Faserverstärker eingesetzt werden, welcher am Ausgang einen 1-zu-N-Faserkoppler aufweist. Mit diesem lässt sich in einfacher weise ein Bündel von Laserstrahlen erzeugen, die den zu vermessenden Gegenstand anstrahlen.

Der Empfänger kann beispielsweise aus mehreren SPAD-Arrays 15A,15B aufgebaut sein, die entweder eindimensional oder zweidimensional, z.B. auch zweidimensional auf einer Sphäre, angeordnet sind. Jede Domäne auf den SPAD-Arrays 15A,15B hat entweder eine separate Ansteuer- und/oder Auswerteelektronik. Wegen der Kompaktheit ist zum Beispiel ein Set von TDC-Kanälen in einem FPGA gegebenenfalls vorzuziehen. Alternativ können die den Domänen zugeordneten Ausgänge auf den SPAD-Arrays gegebenenfalls über einen Multiplexer adressiert und einer gemeinsamen Zeitmesschaltung zugeführt werden.

In der gezeigten Ausführungsform umfasst die Schaltung beispielsweise einen Oszillator 22 als Zeitbasis, z.B. mit sub-ppm ("parts per million") Präzision, welcher einen im FPGA 21 implementierten Clock 23 ansteuert. Der Clock 23 wird einerseits für die Ansteuerung eines Lasers 14 und andererseits als Basis für die im FPGA 21 implementierte TDC-Zeitmessschaltung 20 verwendet. Der Laser 14 emittiert eine pulsierte oder pulsartig modulierte Lasermessstrahlung 7, welche nach der Reflektion bzw. Rückstreuung an einem Ziel 5 als Empfangsstrahlung 70 auf einen ein oder mehrere SPAD-Arrays 15A,15B aufweisenden Detektor trifft. Ferner ist im FPGA 21 beispielsweise ein dem TDC 20 vorgeschalteter Komparator 24 implementiert.

Die Laufzeitmessung erfolgt auf einer Recheneinheit 13, welche ebenfalls direkt auf dem FPGA 21 implementiert ist, wobei beispielsweise auch ein Range Walk über eine auf dem FPGA 21 implementierte Lookup-Tabelle 25 kompensiert wird.

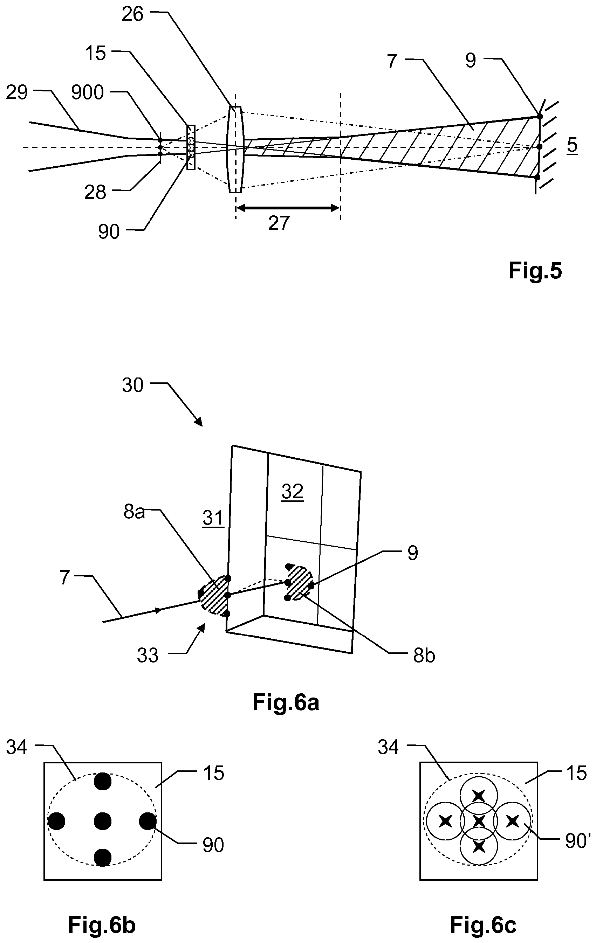

**Figur 5** zeigt eine schematische Darstellung von bei einer Fixfokus-Empfangsoptik 26 auftretenden Messdistanzabhängigen Zerstreuungskreisen des empfangenen Lichtflecks des Empfangsstrahls auf dem Empfänger.

Die Figur zeigt schematisch die Position des SPAD-Arrays 15, der Empfangsoptik 26 und einer Zieloberfläche 5 mit Oberflächenpunkten 9. Ferner ist schematisch die Strahlaufweitung des Messstrahls 7 ab der Rayleighlänge 27 angedeutet.

Die Oberflächenpunkte 9 werden als Bildpunkte 900 in der Bildebene 28 der Empfangsoptik 26 abgebildet, wobei der geometrische Ort 29 der Bildebenen für unterschiedliche Messdistanzen angedeutet ist.

Zum Beispiel entsteht durch die Positionierung des SPAD-Arrays 15, typischerweise nahe oder im Brennpunkt, für die jeweiligen den Objektpunkten 9 zugeordneten Lichtpunkten auf dem SPAD-Array ein distanzabhängiger Unschärfebereich. Bei kurzen Distanzen sind die Lichtpunkte ausgedehnt, in der Figur dargestellt durch entsprechende Zerstreuungskreise 90. Beim erfinderischen Empfänger sind Zerstreuungskreise 90 als Teilbereiche aus Mikrozellen realisiert. Jeder dieser Zerstreuungskreise 90 ist einer Richtung im Objektraum zugeordnet, wodurch mittels den Teilbereichen auf dem SPAD-Array eine lateral räumlich aufgelöste Distanzmessung realisiert werden kann. Insbesondere ist die räumliche Auflösung der Empfangsoptik erheblich höher als die des Sendekanals, da der Empfangskanal durchwegs eine grössere Pupille als der Sendekanal aufweist. Dieser Unschärfebereich (Zerstreuungskreis) kann mittels Distanzmessung bestimmt und in einem weiteren Schritt mittels Entfaltung (Deconvolution) die laterale Ortsauflösung am Objekt gesteigert werden.

Beispielsweise kann aufgrund eines automatisierten vorprogrammierten Messvorgangs jeweils erst eine Grobdistanz zur Zielebene 5 bestimmt werden, wobei anschliessend den einzelnen Teilbereichen der SPAD-Anordnung distanzabhängige Unschärfebereiche und Zielrichtungen (Winkel im Objektraum relativ zur Zielachse) zugeordnet werden können.

Die **Figuren 6a-6c** zeigen beispielhaft eine Lichtverteilung auf dem Empfänger als Funktion der Hyperfokaldistanz, beispielsweise bei der Anmessung mittels eines Lasermessstrahls 7 auf ein Fenster 30.

Wie in Figur 6a angedeutet trifft ein erster Teil 8a des Messstrahls 7 den näher gelegenen Fensterrahmen 31 und ein zweiter Teil 8b des Messstrahls das Fensterglas 32. Durch den Lichtfleck 33 des Messstrahls 7 werden unterschiedliche Anmesspunkte 9 erfasst, wobei der auf der auf der SPAD-Anordnung 15 abgebildete Laserlichtfleck 34 beispielsweise für Distanzen grösser als der Hyperfokaldistanz, wie in Figur 6b angedeutet, ein scharfes Abbild des Objekts/der Objekte mit hoher Ortsauflösung erzeugt, d.h. mit scharf erscheinenden Punktbildern 90 der Anmesspunkte 9. Für Distanzen kürzer als der Hyperfokaldistanz, wie in der Figur 6c angedeutet, wird das durch den Laser angestrahlte Objekt als ein unscharfer Lichtfleck 34 auf dem SPAD-Array 15 abgebildet und die den Anmesspunkten 9 zugeordneten Bildzonen 90' zeigen grössere Unschärfe als bei langen Distanzen. Die Bildzonen 90' können durch Teilbereiche aus Mikrozellen realisiert sein. Da gemäss den Figuren 6b und 6c die Zonen 90' immer noch einzeln identifizierbar sind, können die Laufzeiten oder die zugehörigen Messdistanzen zu den Teilbereichen 8a,8b raumaufgelöst erkannt respektive bestimmt werden. Mittels Deconvolution kann zudem beispielsweise die laterale Auflösung weiter verbessert werden.

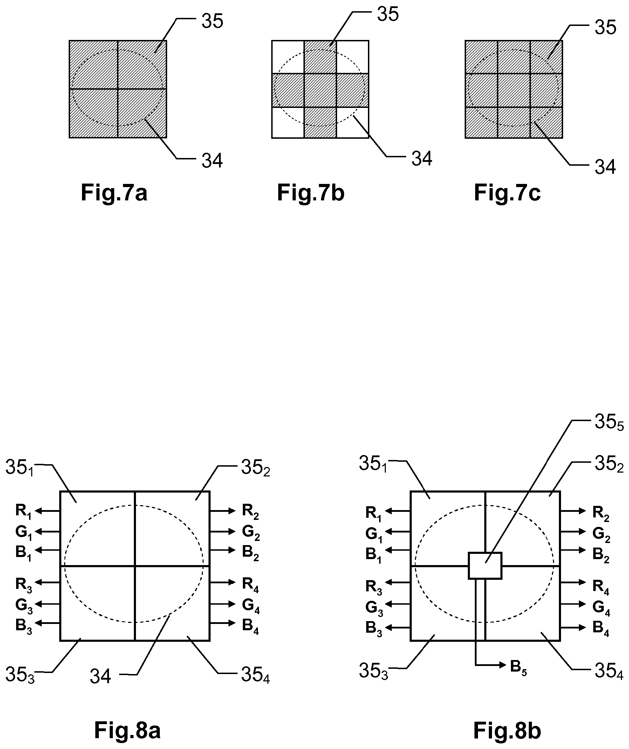

Die **Figuren 7a****-c** zeigen schematisch SPAD-Anordnungen 15, jeweils mit unterschiedlichen matrixartigen Teilbereichen (Domänen) 35 bestehend aus vielen Mikrozellen, nämlich mit vier Domänen in Quadrantenaufteilung (Fig. 7a), mit fünf Domänen in Kreuzanordnung (Fig. 7b), und mit 9 Domänen (Fig. 7c).

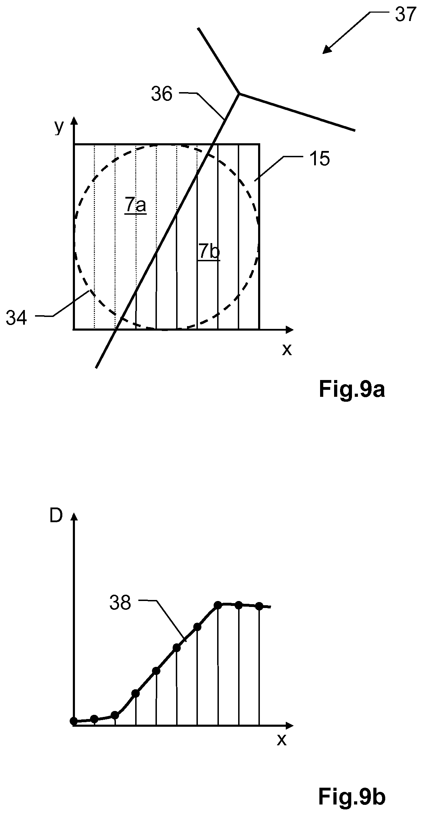

Der SPAD-Array 15 kann dabei beispielsweise elektronisch in fixe Domänen unterteilt sein, wobei jede Domäne jeweils ein separates Ausgangssignal erzeugt. Alternativ können die Mikrozellen aber wie z.B. in Figur 9a dargestellt, auch örtlich sequentiell aktiviert werden, z.B. zuerst zeilen- und dann spaltenweise Aktivierung und Auslesung von Mikrozellen, um so unterschiedliche Positionen auf dem Detektor abzufragen und somit variabel einstellbare Domänen zu definieren.

Bisherige Distanzmesseinheiten können das Mixed-Pixel Problem (durch den Sendestrahl erfasste Mehrfachziele), wenn überhaupt, nur mit beschränkter Zeit- und Ortsauflösung beheben. Typischerweise zeigt ein herkömmlicher Distanzmesser für mehrere Anmesspunkte 9 (siehe Fig. 6a) eine einzige mittlere Distanz.

SPAD-Arrays mit erfindungsgemässem domänenartigem Zusammenzug von Mikrozellen erreichen eine sub-Pikosekunden Zeitauflösung, wobei der erfindungsgemässe SPAD-Array in der Lage ist, eine ortsaufgelöste Distanzmessung, beispielsweise an Ecken, Stufen, Löchern, Schlitzen und Kanten, zu ermöglichen. Zum Beispiel erzeugt jede Domäne 35 ein Laufzeitsignal das je einer Distanzmesseinheit weitergeleitet wird. Dadurch wird der Querschnitt des abgebildeten Laserstrahls 34 durch die SPAD-Anordnung zeit- und ortsaufgelöst erfasst.

Die Figuren 8a und 8b zeigen beispielhaft SPAD-Arrays mit verschiedenen Multicolor-Masken.

**Figur 8a** zeigt einen SPAD-Array 15 mit vier Domänen 35_{[1-4]}, wobei diese je eine RGB-Filtermaske aufweisen. Die Masken können beispielsweise als Bayer-Pattern ausgeführt sein. Weiter ist der auf dem Empfänger 15 auftreffende Empfangsstrahl 34 schematisch dargestellt. Der SPAD-Array 15 hat in dieser Ausführungsform 4x3 Signalausgänge R_{[1-4]},G_{[1-4]},,B_{[1-4]}, die je einer Auswerteelektronik zugeführt werden, welche beispielsweise ausgebildet ist um die Amplitude oder aber auch die Laufzeit zwischen Zielobjekt und Instrument zu messen. Dadurch lassen sich wie oben beschrieben in den vier Sektoren um die Zielachse herum örtlich aufgelöst die Messdistanzen bestimmen, als auch Farbtexturen und Farbübergänge feststellen. Die Farbinformation gibt Hinweise, ob die angemessene Oberfläche zusammenhängend oder in Segmente unterteilt ist. Ein Farbtonwechsel steht oft in Zusammenhang mit einer Kante oder einer Stufe. Diese Zusatzinformation unterstützt die Berechnung der den vier Sektoren 35_{[1-4]} (Domänen) zugeordneten wahren Objektdistanzen.

Falls der Transmitter derart konfiguriert ist, dass der Sendestrahl beispielsweise mittels einer Kombination aus einem blauen, grünen und roten Laser erzeugt wird, dann ist es möglich mit allen Farben direkt Distanzen zu messen.

Die Farbkodierung beim Empfangssensor hat den Vorteil, dass das Hintergrundlicht spektral auf die RGB-Farb-Kanäle aufgeteilt wird und das Rauschen trotz der grossen spektralen Breite nicht wesentlich zunimmt. Andererseits können Flächen mit einer spezifischen Farbe, beispielsweise blau bei 440 nm, noch mit hoher Signalgüte gemessen werden.

Falls mit wenigstens zwei Farbkanälen gleichzeitig gemessen wird, beispielsweise mit RG-Farbkanälen, ist es des Weiteren möglich, eine atmosphärische Dispersionskorrektur an den Rohdistanzen anzubringen, so dass die ermittelte Distanz ohne Einfluss der Atmosphäre ist. Zum Beispiel wird dadurch ein Ermitteln der Gruppenbrechungsindices der Luft über meteorologische Hilfsmessungen hinfällig.

Weiter kann beispielsweise eine laterale Ortsauflösung auch bei gleich entfernten Flächen mit unterschiedlichem spektralem Reflexionsvermögen erfolgen.

Die diffuse Rückstreuung von Laserstrahlung an rauhen Objektflächen erzeugt sogenannte Speckles. Ueber die Empfängerfläche des SPAD-Arrays entstehen dadurch Helligkeitsvariationen, die zu Amplitudenrauschen und Distanzrauschen führen. Bei einer Distanzmessung mit mehrfarbigen oder spektral breiten Lasern oder SLEDs (superlumineszente Dioden) überlagern sich die den einzelnen Farben zugeordneten Specklesfelder, wobei sich sowohl die Variation der Empfangssignale als auch die Ergebnisse der Distanzmessungen ausmitteln. Jeder Farbkanal des SPAD-Arrays erzeugt eine durch Speckles beeinflusste Distanz, wodurch die Schwankung des Mittelwerts der gemessenen Distanzen reduziert werden kann.

Beispielsweise liefert ein SPAD-Array bestehend aus vier Domänen definiert durch eine RGBNir-Maske (nicht gezeigt) jeweils pro Domäne vier Laufzeit-Signale, welche den entsprechenden Laserspektren zugeordnet sind. Falls der Laser einen Strahl mit geringer Divergenz aufweist, dann ist die laterale räumliche Auflösung zwar durch den Sendestrahl recht gut bestimmt, jedoch offenbaren sich über Beugungseffekte des Specklesfelds chromatisch induzierte Distanzfehler, insbesondere bei Laserdiodenquellen. Wird jedoch die Distanz bei mehreren, hier also beispielsweise vier, Wellenlängen gemessen, so reduziert sich der Fehler der über die Wellenlängen gemittelten Distanz, hier beispielsweise wie Eins dividiert durch die Wurzel von Vier.

**Figur 8b** zeigt einen SPAD-Array 15 mit vier Domänen 35_{[1-4]} in Quadrantenaufteilung und einer speziell farbcodierten kleinen zentralen Domäne 35₅. Dieser zentrale Teilbereich 35₅ ist beispielsweise mit einer blauen Filtermaske bestückt und die vier Domänen 35_{[1-4]} aussen herum sind mit einem herkömmlichen RGB-Farbfilter versehen.

Der blaue Spektralanteil B₅ mit kurzer und damit hochauflösender Wellenlänge des Laserstrahls wird also im zentralen Teil 35₅ detektiert und ausgelesen, wohingegen in den äusseren Quadranten 35_{[1-4]}, wie bei Figur 8a, alle Wellenlängen des Senders empfangen werden. Aufgrund der hohen empfängerseitigen optischen Ortsauflösung kann mit dem zentralen Teilbereich 35₅ eine Distanzmessung mit präziser Ortsauflösung realisiert werden, wohingegen mit den vier Quadranten 35_{[1-4]} aussen herum beispielsweise jeweils wenigstens eine den Raumrichtungen der Teilbereiche zugeordnete Rohdistanz ermittelt wird.

Wird beispielsweise eine Kante einer Raumecke angemessen, so wird mit der zentralen Domäne 35₅ eine exakte Distanz zur Ecke erfasst. Die vier Quadranten 35_{[1-4]} hingegen ermitteln eine Distanz zu den angrenzenden Flächen. Mittels der Farbinformation können die vier Distanzen den beiden Objektflächen zugeteilt werden.

Die **Figuren 9a,9b** zeigen schematisch ein Erkennen einer Kantenlinie 36 durch zeilen- und spaltenartige Aktivierung und Auslesung von Mikrozellen der SPAD-Anordnung 15.

Eine durch zwei Ebenen definierte Kantenlinie 36 tritt beispielsweise beim Anmessen einer Raumecke auf, wobei ein erster Teilstrahl 7a die erste Wand und ein zweiter Teilstrahl 7b die zweite Wand erfasst.

Figur 9a zeigt schematisch eine SPAD-Anordnung 15 zur Erfassung der Abbildung der Raumecke 37, wobei der Empfangsstrahl 34 die Teilsignale 7a,7b bezüglich der Kantenlinie 36 zwischen den zwei Wänden enthält. Der Empfangsstrahl 34 wird nun derart erfasst, dass die Mikrozellen in einer Spalte x jeweils zusammengeschaltet sind und ein einzelnes Distanzsignal D erzeugen.

Wie in Figur 9b dargestellt, erzeugt die Verschaltung der Mikrozellen in Domänen als Spalten eine Art Projektion 38 auf die Spaltenachse (x-Achse). Eine analoge Verschaltung der Mikrozellen in Domänen als Zeilen erzeugt eine weitere Projektion (nicht dargestellt) auf die Zeilenachse (y-Achse). Aufgrund dieser beiden Projektionen kann nun beispielsweise auf die Kantenlinie im Raum geschlossen werden.

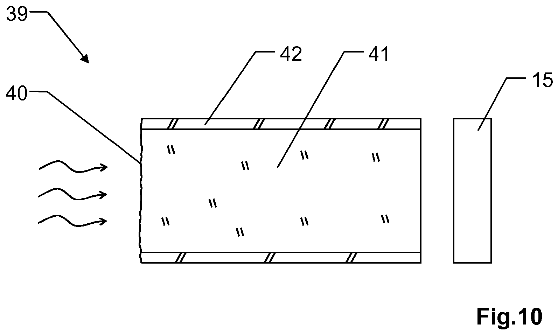

**Figur 10** zeigt eine Variante wie das Empfangslicht möglichst definiert homogen auf den SPAD-Array 15 verteilt werden kann. Es ist das Ziel möglichst alle Mikrozellen eines SPAD-Arrays 15 auszuleuchten und dies unabhängig von der Distanz des Zielobjekts. Besonders geeignet und auch bekannt aus bisherigen APDs sind optische Multimodelichtleiter aus Glas, Quarz oder Kunststoff. Mittels eines Modenscramblers wird am Ausgang eines Multimodelichtleiters eine besonders homogene Lichtverteilung erreicht. Das Faserende kann mit optischer Abbildung auf die Fläche eines SPAD-Arrays abgebildet werden, das Licht kann aber auch in kurzem Abstand auf die sensitive Fläche direkt gekoppelt werden.

Die Figur zeigt eine spezielle Ausführungsform eines Lichtleiters als Vierkantfaser 39 mit mattierter Eintrittsfläche 40. Die Mattierung erzeugt eine gleichmässige Ausleuchtung des Faserquerschnitts und der Lichtleiter in Richtung SPAD-Array 15 vermischt durch kaleidoskopische Spiegelung zusätzlich das optische Signal und schliesst dieses gleichzeitig durch optische Wellenleitung im Bereich der Querschnittsfläche ein. Am Austrittsende der Vierkantfaser 39 ist somit eine homogene Lichtverteilung über den SPAD-Array 15 gewährleistet. Die Vierkantfaser 39 selber ist wie ein Multimodelichtleiter aufgebaut, bestehend aus einem Kernbereich 41 und einem optischen Cladding 42. Das optische Cladding 42 bewirkt, dass Strahlung mit Ausbreitungsrichtung innerhalb der numerischen Apertur den Wellenleiter nicht seitlich verlassen kann.

Es versteht sich, dass diese dargestellten Figuren nur mögliche Ausführungsbeispiele schematisch darstellen. Sima

## Patentansprüche

1. Distanzmesser, insbesondere zur Verwendung in einem Laserscanner, Tachymeter, Profiler, Lasertracker, LIDAR-Messgerät, oder handgehaltenen Distanzmessgerät, für eine Distanzmessung zu einem Zielobjekt, mit
• einem Transmitter (14) der konfiguriert ist zum Erzeugen eines eine Zielachse definierenden gerichteten, insbesondere kollimierten, Sendestrahls (7) für eine Einzelpunktmessung zum Zielobjekt, insbesondere ein gepulster Lasermessstrahl,
• einem Empfänger der konfiguriert ist zum Erfassen von zumindest einem Teil des vom Zielobjekt zurückkommenden Sendestrahls, nachfolgend Empfangsstrahl (70) genannt, und
• einer Recheneinheit (13) die konfiguriert ist zum Ableiten einer Distanz zum Zielobjekt basierend auf dem Empfangsstrahl (70),
wobei
• der Empfänger zum Erfassen des Empfangsstrahls (70) einen optoelektronischen Sensor basierend auf einer Anordnung von Mikrozellen aufweist, insbesondere wobei der Sensor ausgebildet ist als Anordnung von Single Photon Avalanche Photodioden (15,15A,15B),
• der Empfänger und die Recheneinheit (13) derart konfiguriert sind, dass ein Satz von einzeln auslesbaren Teilbereichen (35,35_{[1-5]}) des Empfängers definierbar ist,
• der Empfänger und die Recheneinheit (13) konfiguriert sind zum Ableiten eines Satzes von Laufzeiten bezüglich unterschiedlichen mit den Teilbereichen (35,35_{[1-5]}) des Empfängers erfassten Querschnittsanteilen des Empfangsstrahls, und
• die Recheneinheit (13) konfiguriert ist, basierend auf mit den Teilbereichen (35,35_{[1-5]}) des Empfängers erfassten Querschnittsanteilen des Empfangsstrahls eine Wertung von mit dem Sendestrahl (7) angestrahlten Oberflächen des Zielobjekts durchzuführen,
**dadurch gekennzeichnet, dass**
die Wertung zumindest auf einem Signalstärkenvergleich von mit unterschiedlichen Teilbereichen erfassten Empfangssignalen basiert, wobei der Empfänger und die Recheneinheit konfiguriert sind, die Wertung beim Ableiten der Distanz zum Zielobjekt zu berücksichtigen und basierend auf der Wertung die aus dem Empfangsstrahl (70) abgeleitete Distanz zum Zielobjekt als fehlerhaft zu kennzeichnen.

2. Distanzmesser nach Anspruch 1,
**dadurch gekennzeichnet, dass** die Wertung des Weiteren auf einem Laufzeitenvergleich von Laufzeiten des Satzes von Laufzeiten basiert.

3. Distanzmesser nach einem der vorhergehenden Ansprüche,
**dadurch gekennzeichnet, dass**
der Empfänger und die Recheneinheit (13) derart konfiguriert sind, dass einzeln auslesbaren Teilbereichen (35,35_{[1-5]}) des Empfängers jeweils ein definierter Querschnittsanteil des Sendestrahls (7) zuordenbar ist, insbesondere wobei dem Querschnittsanteil eine definierte Zielrichtung relativ zur Zielachse zuordenbar ist.

4. Distanzmesser nach Anspruch 3,
**dadurch gekennzeichnet, dass**
der Empfänger und die Recheneinheit (13) konfiguriert sind,
• zum Ableiten von jeweils den Teilbereichen (35,35_{[1-5]}) des Empfängers zugeordneten Rohdistanzdaten,
• zum Durchführen eines Entfaltungsalgorithmus zum Ableiten eines Satzes von Feindistanzen, basierend auf den Rohdistanzdaten, wobei der Satz von Feindistanzen eine Distanzmessung mit einer lateralen räumlichen Auflösung grösser als der durch den totalen Strahlquerschnitt des Sendestrahls (7) definierten lateralen räumlichen Auflösung definiert, im Speziellen wobei für jeden Teilbereich (35,35_{[1-5]}) des Satzes von Teilbereichen eine Feindistanz abgeleitet wird, und
• zum Zuordnen von Feindistanzen zu definierten Zielrichtungen relativ zur Zielachse.

5. Distanzmesser (1) nach Anspruch 4,
**dadurch gekennzeichnet, dass**
die Recheneinheit (13) konfiguriert ist zum Durchführen eines automatisierten vorprogrammierten Messvorgangs aufweisend die Schritte
• Ableiten der Rohdistanzdaten,
• Ableiten des Satzes von Feindistanzen, und
• Zuordnen von Feindistanzen zu definierten Zielrichtungen.

6. Distanzmesser nach Anspruch 4 oder 5,
**dadurch gekennzeichnet, dass**
das Ableiten des Satzes von Feindistanzen auf mindestens einem von folgendem basiert
• einer Lookup-Tabelle die eine Korrelation zwischen einer Rohdistanz und einem Strahldurchmesser des auf dem Empfänger abgebildeten Sendestrahls (34) ermöglicht, und
• eine Funktion, welche basierend auf den Rohdistanzen als Funktionsparameter einen Strahldurchmesser des auf dem Empfänger abgebildeten Sendestrahls (34) ausgibt.

7. Distanzmesser nach einem der vorhergehenden Ansprüche,
**dadurch gekennzeichnet, dass**
der Sensor als SPAD-Anordnung (15,15A,15B) ausgebildet ist und derart konfiguriert ist, dass er mindestens eine der folgenden Eigenschaften aufweist:
• eine Photoempfindlichkeit für Wellenlängen zwischen 300 nm bis 1100 nm, insbesondere wobei die SPAD-Anordnung auf einem Silizium-Empfänger basiert,
• eine Photoempfindlichkeit für Wellenlängen zwischen 700 nm bis 2000 nm, insbesondere wobei die SPAD-Anordnung auf einem InGaAs-Empfänger basiert,
• einen Overbreak-Betriebsmodus,
• einen Linear-Betriebsmodus.

8. Distanzmesser nach einem der vorhergehenden Ansprüche,
**dadurch gekennzeichnet, dass**
der Empfänger derart konfiguriert ist, dass
• der Sensor ausgebildet ist als Anordnung von Single Photon Avalanche Photodioden (15,15A,15B), nachfolgend SPAD-Anordnung genannt, die eine Vielzahl von Mikrozellen aufweist und derart konfiguriert ist, dass die Mikrozellen einzeln und/oder in Mikrozellengruppen auslesbar sind und dadurch einzeln auslesbare Teilbereiche (35,35_{[1-5]}) des Empfängers definierbar sind, und/oder
• der Empfänger mehrere SPAD-Anordnungen (15,15A,15B) aufweist, wobei die mehreren SPAD-Anordnungen derart konfiguriert sind, dass einzeln auslesbare Teilbereiche (35,35_{[1-5]}) des Empfängers jeweils derart definierbar sind, dass sie auf Mikrozellen einer einzelnen SPAD-Anordnung oder auf Mikrozellen einer Kombination von SPAD-Anordnungen der mehreren SPAD-Anordnungen basieren.

9. Distanzmesser nach einem der vorhergehenden Ansprüche,
**dadurch gekennzeichnet, dass**
der Transmitter (14) konfiguriert ist um den Sendestrahl (7) als gepulste Lasermessstrahlung bereitzustellen, insbesondere mit einer einzelnen Pulsdauer von weniger als 500 Pikosekunden, im Speziellen von weniger als 100 Pikosekunden.

10. Distanzmesser nach einem der vorhergehenden Ansprüche,
**dadurch gekennzeichnet, dass**
der Empfänger derart konfiguriert ist, insbesondere mittels einer Filtermaske mit bezüglich Transmissionsverhalten unterschiedlichen Filtern, im Speziellen einer RG-Maske, einer RGB-Maske oder einer RGBNir-Maske, dass die Sensorfläche Bereiche mit zueinander unterschiedlicher spektraler Photoempfindlichkeit aufweist,
insbesondere wobei der Transmitter (14) konfiguriert ist, den Sendestrahl (7) über einen definierten auf die Filter der Filtermaske abgestimmten Wellenlängenbereich zu erzeugen, im Speziellen mittels Erzeugen von koaxialen Laserstrahlen unterschiedlicher Wellenlänge.

11. Distanzmesser nach Anspruch 10,
**dadurch gekennzeichnet, dass**
die Recheneinheit (13) konfiguriert ist, basierend auf den Bereichen mit zueinander unterschiedlicher spektraler Photoempfindlichkeit, beim Durchführen der Wertung Beugungseffekte des Specklefelds zu berücksichtigen.

12. Distanzmesser nach Anspruch 4 und 11,
**dadurch gekennzeichnet, dass**
die Recheneinheit (13) konfiguriert ist, basierend auf den Bereichen mit zueinander unterschiedlicher spektraler Photoempfindlichkeit beim Ableiten der Feindistanzen Beugungseffekte des Specklefelds zu berücksichtigen.

13. Distanzmesser nach einem der vorhergehenden Ansprüche,
**dadurch gekennzeichnet, dass**
der Distanzmesser eine Faserkopplung aufweist und derart konfiguriert ist, dass zurückkommende Teile des Sendestrahls mittels einer Lichtmischung gleichmässig auf den Sensor (15,15A,15B) verteilt werden, insbesondere wobei die Lichtmischung auf mindestens einem von einem Diffusor, einem faseroptischen Lichtleiterstab, einem Lichtleiter mit Scrambler, einer Lichtleitfaser, einer Vierkantfaser (39), einem Lichttrichter, einer Blende, und einer Defokussierung basiert.

14. Distanzmesser nach einem der vorhergehenden Ansprüche,
**dadurch gekennzeichnet, dass**
der Distanzmesser eine Empfangsschaltung aufweist, die konfiguriert ist für eine Verarbeitung des Empfangssignals und zur Bereitstellung von mindestens einem von folgendem:
• eine Wellenform-Digitalisierung des Empfangssignals mit sub-Picosekunden genauer Zeitauflösung,
• eine Zeitmessschaltung mit einem Zeit-Digital-Konverter (20), und
• eine Phasenmessung des Empfangssignals bezüglich eines durch den Sendestrahl (7) bereitgestellten Sendesignals,
insbesondere wobei die Empfangsschaltung einen Differenzierer aufweist, insbesondere einen elektrischen Hochpass-Filter.

## Claims

1. Distance meter, in particular for use in a laser scanner, tachymeter, profiler, laser tracker, LIDAR measuring device, or handheld distance measuring device, for a distance measurement to a target object, comprising
• a transmitter (14), which is configured to generate an oriented, in particular collimated, emitted beam (7), which defines a target axis, for a single-point measurement to the target object, in particular a pulsed laser measurement beam,
• a receiver, which is configured to acquire at least a part of the emitted beam returning from the target object, referred to as the received beam (70) hereafter, and
• a computer unit (13), which is configured to derive a distance to the target object based on the received beam (70),
wherein
• the receiver for acquiring the received beam (70) has an optoelectronic sensor based on an arrangement of microcells, in particular wherein the sensor is designed as an arrangement of single-photon avalanche photodiodes (15, 15A, 15B),
• the receiver and the computer unit (13) are configured such that a set of individually readable subregions (35, 35_{[1-5]}) of the receiver is definable, and
• the receiver and the computer unit (13) are configured to derive a set of runtimes with respect to different cross-sectional components of the received beam acquired using the subregions (35, 35_{[1-5]}) of the receiver, and
• the computer unit (13) is configured, based on the cross-sectional components of the received beam acquired using the subregions (35, 35_{[1-5]}) of the receiver, to carry out an evaluation of surfaces of the target object irradiated using the emitted beam (7),
**characterized in that**
the evaluation is at least based on a signal strength comparison of reception signals acquired using different subregions, wherein the receiver and the computer unit are configured to take the evaluation into consideration in the derivation of the distance to the target object and based on the evaluation to identify as incorrect the distance to the target object derived from the received beam (70).

2. Distance meter according to Claim 1,
**characterized in that**
the evaluation is also based on a runtime comparison of runtimes of the set of runtimes.

3. Distance meter according to any one of the preceding claims,
**characterized in that**
the receiver and the computer unit (13) are configured such that a defined cross-sectional component of the emitted beam (7) can be associated with respective individually readable subregions (35, 35_{[1-5]}) of the receiver, in particular wherein a defined target direction in relation to the target axis can be associated with the cross-sectional component.

4. Distance meter according to Claim 3,
**characterized in that**
the receiver and the computer unit (13) are configured
• to derive raw distance data respectively associated with the subregions (35, 35_{[1-5]}) of the receiver,
• to carry out a deconvolution algorithm for deriving a set of fine distances, based on the raw distance data, wherein the set of fine distances defines a distance measurement having a lateral spatial resolution greater than the lateral spatial resolution defined by the total beam cross section of the emitted beam, especially wherein one fine distance is derived for each subregion (35, 35_{[1-5]}) of the set of subregions, and
• to associate fine distances with defined target directions in relation to the target axis.

5. Distance meter (1) according to Claim 4,
**characterized in that**
the computer unit (13) is configured to carry out an automated preprogrammed measurement procedure having the following steps
• deriving the raw distance data,
• deriving the set of fine distances, and
• associating fine distances with defined target directions.

6. Distance meter according to Claim 4 or 5,
**characterized in that**
the derivation of the set of fine distances is based on at least one of the following
• a lookup table, which enables a correlation between a raw distance and a beam diameter of the emitted beam (34) imaged on the receiver, and
• a function, which outputs a beam diameter of the emitted beam (34) imaged on the receiver based on the raw distances as function parameter.

7. Distance meter according to any one of the preceding claims,
**characterized in that**
the sensor is designed as an SPAD arrangement (15, 15A, 15B) and is configured such that it has at least one of the following properties:
• a photosensitivity for wavelengths between 300 nm and 1100 nm, in particular wherein the SPAD arrangement is based on a silicon receiver,
• a photosensitivity for wavelengths between 700 nm and 2000 nm, in particular wherein the SPAD arrangement is based on an InGaAs receiver,
• an overbreak operating mode,
• a linear operating mode.

8. Distance meter according to any one of the preceding claims,
**characterized in that**
the receiver is configured such that
• the sensor is designed as an arrangement of single-photon avalanche photodiodes (15, 15A, 15B), referred to as an SPAD arrangement hereafter, which has a plurality of microcells and is configured such that the microcells are readable individually and/or in microcell groups and thus individually readable subregions (35, 35_{[1-5]}) of the receiver are definable, and/or
• the receiver has multiple SPAD arrangements (15, 15A, 15B), wherein the multiple SPAD arrangements are configured such that individually readable subregions (35, 35_{[1-5]}) of the receiver are each definable such that they are based on microcells of a single SPAD arrangement or on microcells of a combination of SPAD arrangements of the multiple SPAD arrangements.

9. Distance meter according to any one of the preceding claims,
**characterized in that**
the transmitter (14) is configured to provide the emitted beam (7) as pulsed laser measurement radiation, in particular having an individual pulse duration of less than 500 picoseconds, especially less than 100 picoseconds.

10. Distance meter according to any one of the preceding claims,
**characterized in that**
the receiver is configured, in particular by means of a filter mask having different filters with respect to transmission behavior, especially an RG mask, an RGB mask, or an RGBNir mask, such that the sensor surface has regions having spectral photosensitivity different from one another,
in particular wherein the transmitter (14) is configured to generate the emitted beam (7) over a defined wavelength range adapted to the filters of the filter mask, especially by means of generating coaxial laser beams of different wavelengths.

11. Distance meter according to Claim 10,
**characterized in that**
the computer unit (13) is configured, based on the regions having spectral photosensitivity different from one another, to take into consideration diffraction effects of the speckle field when carrying out the evaluation.

12. Distance meter according to Claim 4 and 11,
**characterized in that**
the computer unit (13) is configured, based on the regions having spectral photosensitivity different from one another, to take into consideration diffraction effects of the speckle field when deriving the fine distances.

13. Distance meter according to any one of the preceding claims,
**characterized in that**
the distance meter has a fiber coupling and is configured such that returning parts of the emitted beam are distributed by means of light mixing uniformly onto the sensor (15, 15A, 15B), in particular wherein the light mixing is based on at least one of a diffuser, a fiber optic light guide rod, a light guide having scrambler, a light guide fiber, a square fiber (39), a light funnel, an aperture, and a defocusing.

14. Distance meter according to any one of the preceding claims,
**characterized in that**
the distance meter has a receiving circuit, which is configured for processing the reception signal and to provide at least one of the following:
• a waveform digitization of the reception signal having sub-picosecond-accurate time resolution,
• a time measuring circuit having a time-digital converter (20), and
• a phase measurement of the reception signal with respect to an emitted signal provided by the emitted beam (7),
in particular wherein the receiving circuit has a differentiator, in particular an electrical highpass filter.

## Revendications

1. Télémètre, en particulier destiné à être utilisé dans un scanner laser, un tachymètre, un profileur, un laser tracker, un appareil de mesure LIDAR ou un appareil de mesure de distance portatif, pour mesurer la distance par rapport à un objet cible, comprenant
• un émetteur (14) configuré pour générer un faisceau d'émission (7) dirigé, en particulier collimaté, définissant une ligne de visée, pour une mesure ponctuelle de l'objet cible, en particulier un faisceau de mesure laser pulsé,
• un récepteur configuré pour détecter au moins une partie du faisceau d'émission renvoyé par l'objet cible, ci-après dénommé faisceau de réception (70), et
• une unité de calcul (13) configurée pour déduire une distance par rapport à l'objet cible sur la base du faisceau de réception (70),
dans lequel
• le récepteur présente, pour détecter le faisceau de réception (70), un capteur optoélectronique basé sur un réseau de microcellules, le capteur étant en particulier réalisé sous la forme d'un réseau de photodiodes à avalanche à photon unique (15, 15A, 15B),
• le récepteur et l'unité de calcul (13) sont configurés de telle sorte qu'un ensemble de zones partielles (35, 35_{[1-5]}) du récepteur pouvant être lues individuellement puisse être défini,
• le récepteur et l'unité de calcul (13) sont configurés pour déduire un ensemble de temps de propagation concernant différentes parties de section transversale du faisceau de réception détectées par les zones partielles (35, 35_{[1-5]}) du récepteur, et
• l'unité de calcul (13) est configurée pour effectuer, sur la base des parties de section transversale du faisceau de réception détectées par les zones partielles (35, 35_{[1-5]}) du récepteur, une évaluation des surfaces de l'objet cible éclairées par le faisceau d'émission (7),
**caractérisé en ce que**
l'évaluation est basée au moins sur une comparaison d'intensités de signal de signaux de réception détectés par différentes zones partielles, le récepteur et l'unité de calcul étant configurés pour prendre en compte l'évaluation lors de la déduction de la distance par rapport à l'objet cible et, sur la base de l'évaluation, pour identifier comme erronée la distance par rapport à l'objet cible déduite à partir du faisceau de réception (70).

2. Télémètre selon la revendication 1,
**caractérisé en ce que** l'évaluation est basée en outre sur une comparaison des temps de propagation de l'ensemble de temps de propagation.

3. Télémètre selon l'une des revendications précédentes,
**caractérisé en ce que**
le récepteur et l'unité de calcul (13) sont configurés de telle sorte qu'à chacune des zones partielles (35, 35_{[1-5]}) du récepteur pouvant être lues individuellement puisse être associée une partie de section transversale définie du faisceau d'émission (7), en particulier une direction de cible définie par rapport à la ligne de visée pouvant être associée à ladite partie de section transversale.

4. Télémètre selon la revendication 3,
**caractérisé en ce que**
le récepteur et l'unité de calcul (13) sont configurés
• pour déduire des données de distance brutes respectivement associées aux zones partielles (35, 35_{[1-5]}) du récepteur,
• pour exécuter un algorithme de déploiement afin de déduire un ensemble de distances fines, sur la base des données de distance brutes, l'ensemble de distances fines définissant une mesure de distance avec une résolution spatiale latérale supérieure à la résolution spatiale latérale définie par la section transversale totale du faisceau d'émission (7), en particulier une distance fine étant déduite pour chaque zone partielle (35, 35_{[1-5]}) de l'ensemble de zones partielles, et
• pour associer des distances fines à des directions de cible définies par rapport à la ligne de visée.

5. Télémètre (1) selon la revendication 4,
**caractérisé en ce que**
l'unité de calcul (13) est configurée pour exécuter un processus de mesure automatisé préprogrammé présentant les étapes suivantes :
• déduction des données de distance brutes,
• déduction de l'ensemble de distances fines, et
• association de distances fines à des directions de cible définies.

6. Télémètre selon la revendication 4 ou 5,
**caractérisé en ce que**
la déduction de l'ensemble de distances fines est basée sur au moins l'un des moyens suivants :
• une table de correspondance permettant d'établir une corrélation entre une distance brute et un diamètre de faisceau du faisceau d'émission (34) reproduit sur le récepteur, et
• une fonction qui, sur la base des distances brutes, fournit en tant que paramètre de fonction un diamètre de faisceau du faisceau d'émission (34) reproduit sur le récepteur.

7. Télémètre selon l'une des revendications précédentes,
**caractérisé en ce que**
le capteur est réalisé sous la forme d'un réseau SPAD (15, 15A, 15B) et est configuré de telle sorte qu'il présente au moins l'une des propriétés suivantes :
• une photosensibilité pour les longueurs d'onde comprises entre 300 nm et 1100 nm, le dispositif SPAD étant en particulier basé sur un récepteur en silicium,
• une photosensibilité pour les longueurs d'onde comprises entre 700 nm et 2000 nm, le dispositif SPAD étant en particulier basé sur un récepteur en InGaAs,
• un mode de fonctionnement au-delà de la tension de claquage,
• un mode de fonctionnement linéaire.

8. Télémètre selon l'une des revendications précédentes,
**caractérisé en ce que** le récepteur est configuré de telle sorte que
• le capteur est réalisé sous la forme d'un réseau de photodiodes à avalanche à photon unique (15, 15A, 15B), ci-après dénommé réseau SPAD, qui présente une pluralité de microcellules et est configuré de telle sorte que les microcellules puissent être lues individuellement et/ou par groupes de microcellules, ce qui permet de définir des zones partielles (35, 35_{[1-51]}) du récepteur pouvant être lues individuellement, et/ou
• le récepteur présente plusieurs réseaux SPAD (15, 15A, 15B), lesdits plusieurs réseaux SPAD étant configurés de telle sorte que des zones partielles (35, 35_{[1-5]}) du récepteur pouvant être lues individuellement puissent être chacune définies de telle sorte qu'elles se basent sur des microcellules d'un seul réseau SPAD ou sur des microcellules d'une combinaison de réseaux SPAD parmi lesdits plusieurs réseaux SPAD.

9. Télémètre selon l'une des revendications précédentes,
**caractérisé en ce que**
l'émetteur (14) est configuré pour fournir le faisceau d'émission (7) sous la forme d'un rayonnement laser de mesure pulsé, en particulier avec une durée d'impulsion unique inférieure à 500 picosecondes, plus particulièrement inférieure à 100 picosecondes.

10. Télémètre selon l'une des revendications précédentes,
**caractérisé en ce que**
le récepteur est configuré, en particulier au moyen d'un masque de filtrage comportant des filtres présentant des caractéristiques de transmission différentes, en particulier un masque RG, un masque RGB ou un masque RGBNir, de telle sorte que la surface de détection présente des zones ayant des photosensibilités spectrales différentes les unes des autres, l'émetteur (14) étant en particulier configuré pour générer le faisceau d'émission (7) sur une plage de longueurs d'onde définie adaptée aux filtres du masque de filtrage, en particulier en générant des faisceaux laser coaxiaux de longueurs d'onde différentes.

11. Télémètre selon la revendication 10,
**caractérisé en ce que**
l'unité de calcul (13) est configurée pour tenir compte, lors de l'évaluation, des effets de diffraction du champ de speckles sur la base des zones présentant des photosensibilités spectrales différentes les unes des autres.

12. Télémètre selon les revendications 4 et 11,
**caractérisé en ce que**
l'unité de calcul (13) est configurée pour tenir compte, lors de la déduction des distances fines, des effets de diffraction du champ de speckles sur la base des zones présentant des photosensibilités spectrales différentes les unes des autres.

13. Télémètre selon l'une des revendications précédentes,
**caractérisé en ce que**
le télémètre présente un couplage par fibre et est configuré de telle sorte que les parties du faisceau d'émission renvoyées soient réparties uniformément sur le capteur (15, 15A, 15B) au moyen d'un mélange de lumière, le mélange de lumière étant en particulier basé sur au moins l'un des éléments suivants : un diffuseur, une tige conductrice de lumière à fibre optique, un guide de lumière avec scrambler, une fibre optique, une fibre carrée (39), un entonnoir de lumière, un diaphragme et une défocalisation.

14. Télémètre selon l'une des revendications précédentes,
**caractérisé en ce que**
le télémètre présente un circuit de réception qui est configuré pour traiter le signal de réception et pour fournir au moins l'un des éléments suivants :
• une numérisation de forme d'onde du signal de réception avec une résolution temporelle de précision sub-picoseconde,
• un circuit de mesure du temps comprenant un convertisseur temps-numérique (20), et
• une mesure de phase du signal de réception par rapport à un signal d'émission fourni par le faisceau d'émission (7),
le circuit de réception présentant en particulier un différenciateur, en particulier un filtre passe-haut électrique.
